# EUROPEAN PATENT SPECIFICATION

(11) **EP 3 841 331 B1**
(45) Date of publication and mention of the grant of the patent: **19.03.2025**
(21) Application number: 19851855.7
(22) Date of filing: 20.08.2019
(51) Int. Cl.: F24D 11/02, F24D 19/10, F24T 10/17, F25B 30/06, F24D 3/18, F24D 10/00, F24D 15/04, F24F 5/00, F24T 10/15, F24T 10/20, F24T 50/00, F24T 10/00, F25B 25/00

(54) **METHOD FOR HEATING AND COOLING**
VERFAHREN ZUM HEIZEN UND KÜHLEN
PROCÉDÉ DE CHAUFFAGE ET DE REFROIDISSEMENT

(30) Priority: 20.08.2018 FI 20185692; 01.04.2019 FI 20195260
(43) Date of publication of application: 30.06.2021
(73) Proprietor: Quantitative Heat OY, 02200 Espoo (FI)
(72) Inventor: NIEMI, Rami, 00530 Helsinki (FI)
(74) Representative: Primrose Oy
(86) International application number: PCT/FI2019/050593
(87) International publication number: WO 2020/039124

(56) References cited:
- CN-A- 104 374 121
- CN-A- 107 763 712
- CN-B- 102 226 541
- DE-A1- 102007 062 402
- GB-A- 2 502 341
- GB-A- 2 502 341
- JP-A- 2006 292 313
- JP-A- 2016 008 663
- KR-B1- 101 636 741
- US-A- 5 339 890
- US-A- 5 461 876
- US-A- 5 992 507
- US-A1- 2007 023 163
- US-A1- 2008 169 084
- US-A1- 2015 068 740

## Description

### FIELD OF THE INVENTION

The present invention relates to a method for heating and cooling of several building spaces or buildings.

### BACKGROUND OF THE INVENTION

District heating and cooling, or centralized heating and cooling, are commonly known systems in which heat energy or cooling energy is produced in a centralized plant or source and distributed via a pipe network to several buildings.

The source of heat energy in centralized heating systems is an energy plant or an industrial plant which can produce heat energy for the distribution to all buildings. Conventionally all the buildings receive heat energy in similar manner and may utilize or consume the heat energy according to needs of the building. The source of cooling energy in centralized cooling systems is normally a large water reservoir or a lake or a sea from which cool water is distributed to all buildings. Conventionally all the buildings receive cooling energy in similar manner and may utilize or consume the cooing energy according to needs of the building. The buildings have a heat exchanger in which the heat energy or the cooling energy of a secondary working fluid flow of the centralized heating system and the pipe network thereof is transferred to primary working fluid of the building for heating or cooling the building. The primary working fluid may be for example heating or cooling air supplied to the building or water flowing in the building heating system.

The disadvantage of prior art centralized heating or cooling systems is that they are complex and do not take into account individual needs of different buildings. This means, that when centralized heating is carried out, all the buildings receive heat energy via the pipe network and each building may only decide how much heat energy it will utilize. Similarly, when centralized cooling is carried out, all the buildings receive cooling energy via the pipe network and each building may only decide how much cooling energy it will utilize. Accordingly, the buildings cannot decide between the heating and cooling. Furthermore, often the heating and cooling sources are different and also the heating and cooling networks may be different. This makes the prior art systems even more complex. Methods for heating and cooling of building spaces according to the prior art are known from US 2007/023163 A1 and US 5,461,876.

### BRIEF DESCRIPTION OF THE INVENTION

An object of the present invention is to provide a method for heating and cooling of several building spaces or buildings so as to solve or at least alleviate the prior art disadvantages.

The object of the present invention is achieved with a method for heating and cooling of several building spaces or buildings which is characterized by what is stated in the independent claim 1.

The preferred embodiments of the invention are disclosed in the dependent claims.

The invention is based on the idea of providing a heating and cooling system for conditioning several building spaces.

The present invention relates to a method for heating and cooling of several building spaces or buildings.

The method comprises:
- circulating secondary working fluid in a secondary thermal network
- performing two or more first heat exchange steps parallel in the secondary thermal network between the secondary working fluid and a primary working fluid of the building space or building in connection with two or more different building spaces or buildings;
- performing a second heat exchange step between the secondary working fluid circulated in the secondary thermal network and ground with a geothermal heat exchanger arranged in a ground hole and arranged in connection with the secondary thermal network.

According to the present invention, the method comprises performing the second heat exchange step between the secondary working fluid circulated in the secondary thermal network ground with the geothermal heat exchanger in the ground hole. The ground hole has a depth of at least 300m.

Further, the deep ground hole of at least 300 meters enables performing the second heat exchange step at higher temperatures in the ground. The temperature in the ground increases as function of the depth. Access to higher temperatures provides more efficient method as the temperature changes needs to be smaller within the method. Further, the deep ground hole enables efficient storing of the excessive thermal energy from the buildings or building spaces without the thermal energy escaping from the ground hole.

The parallel first exchange steps enable combining the heat exchange of the parallel first exchange steps to each other and to the second heat exchange step.

The second heat exchange step comprises circulating the secondary working fluid in the geothermal heat exchanger and performing heat exchange between the secondary working fluid and the ground in the ground hole.

Thus, the secondary working fluid may be utilized in the first and second heat exchange steps.

Alternatively, the second heat exchange step comprises circulating geothermal working fluid in the geothermal heat exchanger, performing heat exchange between the secondary working fluid circulated in the secondary thermal network and the geothermal working fluid circulated in the geothermal heat exchanger and performing heat exchange between the geothermal working fluid and the ground in the ground hole.

Accordingly, the geothermal working fluid and the secondary working fluid circulate separately and are arranged in heat exchange connection with each other.

In one embodiment, the second heat exchange step comprises circulating the geothermal working fluid in a geothermal network provided to the geothermal heat exchanger in the ground, performing the second heat exchange step with a secondary heat exchanger or a secondary heat pump between the secondary working fluid circulated in the secondary thermal network and the geothermal working fluid circulated in the geothermal network, and performing a geothermal heat exchange step between the geothermal working fluid and the ground with the geothermal heat exchanger arranged in the ground hole.

Accordingly, the geothermal working fluid and the secondary working fluid may circulated separately and arranged in heat exchange connection with each other with the secondary heat pump or the secondary heat exchanger.

Therefore, the building spaces or buildings are additionally in heat exchange connection with geothermal heat exchanger arranged in connection with the secondary thermal network via the secondary heat pump. Thus, the geothermal network and the secondary thermal network are separate networks which are provided in the secondary heat exchange connection via the secondary heat pump or the secondary heat exchanger. The secondary heat pump enables utilizing different temperatures and different working fluids in the geothermal network and in the secondary thermal network. Thus, low temperatures in the ground may be efficiently utilized in the secondary thermal network.

The method further comprises operating the geothermal heat exchanger in a heat extraction mode in which the second heat exchange step comprises transferring heat energy from the ground to the secondary working fluid or to the geothermal working fluid in the geothermal heat exchanger.

Alternatively, the method comprises operating the geothermal heat exchanger in a heat charging mode in which the second heat exchange step comprises transferring heat energy from the secondary working fluid or from the geothermal working fluid to the ground in the geothermal heat exchanger.

Therefore, the geothermal heat exchanger may be used in the extraction mode or in charging based on the net heat energy need or excess of the parallel first heat exchange steps.

The method may also comprise performing at least one of the two or more parallel first heat exchange steps in a heating mode in which heat energy in transferred from the secondary working fluid to the primary working fluid of the building space or the building.

Alternatively or additionally, the method may comprise performing at least one of the two or more parallel first heat exchange steps in a cooling mode in which heat energy in transferred from the primary working fluid of the building space or the building to the secondary working fluid.

Further alternatively, the method may comprise performing at least one of the two or more parallel first heat exchange steps in a heating mode in which heat energy in transferred from the secondary working fluid to the primary working fluid of the building space or the building, and performing at least one of the two or more first primary heat exchange steps in a cooling mode in which heat energy in transferred from the primary working fluid of the building space or the building to the secondary working fluid.

Thus, each of the first heat exchange steps may be carried out in heating or in cooling mode independently of the other first heat exchange steps.

The method may comprise carrying out the two or more parallel first heat exchange steps with two or more parallel primary heat exchangers provided in connection with two or more different building spaces, operating at least one of the two or more the primary heat exchanges in the heating mode in which heat energy in transferred from the secondary working fluid to the primary working fluid of the building space or the building, and operating at least one of the two or more the primary heat exchangers in the cooling mode in which heat energy in transferred from the primary working fluid of the building space or the building to the secondary working fluid. The method may further comprise carrying out district thermal exchange between the at least one of the two or more the primary heat exchanges operated in the heating mode and the at least one of the two or more the primary heat exchangers operated in the cooling mode via the secondary thermal network.

The method may further comprise circulating high-temperature secondary working fluid in a supply line of the secondary thermal network and low-temperature secondary working fluid in a return line of the secondary thermal network, and increasing the temperature of the high-temperature secondary working fluid circulated in supply line of the secondary thermal network and lowering the temperature of the low-temperature secondary working fluid circulated in return line of the secondary thermal network by utilizing a heat pump arranged to the secondary thermal network between the supply line and the return line.

An advantage of the invention is that the method combines district and local heating as well as heating and cooling. The invention allows different buildings and building spaces to be heated and cooled individually and further to exchange thermal energy with each other. Therefore, the different buildings or building spaces may utilize thermal energy of each other and only the net or overall thermal energy needed or in excess may be extracted or supplied to or from, respectively, the geothermal heat exchanger which is connected to the buildings or building spaces. Further, the geothermal heat exchanger may be used in the heat extraction mode when net thermal energy need of the buildings or building spaces is negative, and in heat charging mode when net thermal energy need of the buildings or building spaces is positive. In the heat extraction mode heat energy is supplied from the ground to the geothermal heat exchanger and further to the secondary thermal network. In the heat charging mode heat energy is supplied from the secondary thermal network to the geothermal heat exchanger and further to the ground.

### BRIEF DESCRIPTION OF THE DRAWINGS

The invention is described in detail by means of specific embodiments with reference to the enclosed drawings, in which
Figure 1 shows schematically a geothermal heat exchanger in extraction mode;
Figure 2 shows schematically a geothermal heat exchanger in charging mode;
Figure 3 shows schematically principle of a heating and cooling system used by the method according to the present invention;
Figure 4 shows a modification of the system of figure 3 with a secondary heat exchanger;
Figure 5 shows schematically a heat pump utilized in the heating and cooling system;
Figure 6 shows schematically a secondary heat pump utilized in the present invention;
Figure 7 shows schematically one embodiment of a heating and cooling system used by the method according to the present invention;
Figure 8 shows a modification of the system of figure 3 with a secondary heat exchanger;
Figure 9 shows schematically another embodiment of a heating and cooling system used by the method according to the present invention;
Figure 10, 11, 12 and 13 show schematically alternative embodiments of the heating and cooling system used by the method according to the present invention;
Figure 14 shows one embodiment of a geothermal heat exchanger; and
Figure 15 show a geothermal heat exchanger not used in the method according to the present invention.

### DETAILED DESCRIPTION OF THE INVENTION

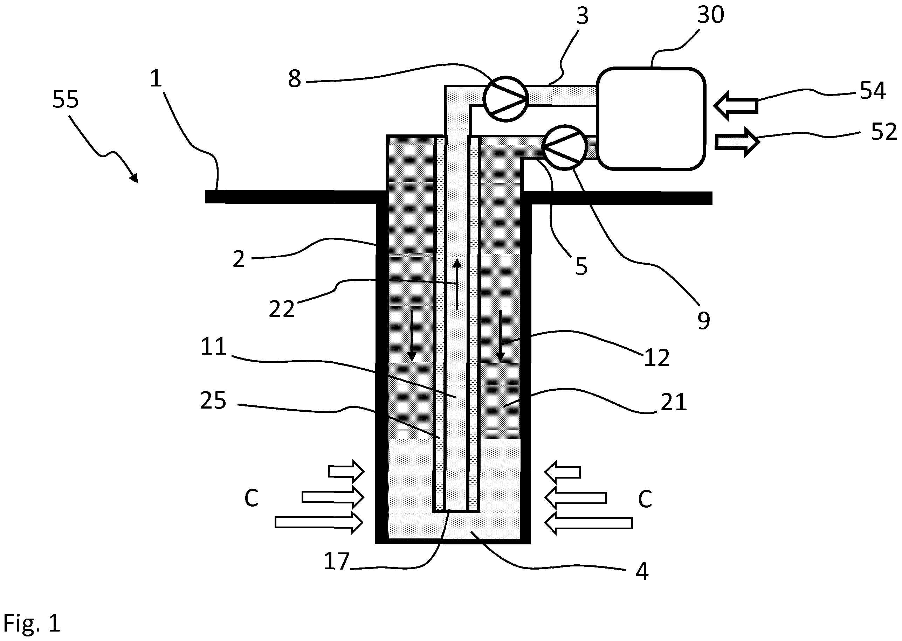

Figure 1 shows a geothermal heating apparatus. The geothermal heating apparatus comprises a ground hole 2 or bore hole provided to the ground and extending downwards into the ground from the ground surface 1. The ground hole 2 may be formed by drilling or some other excavating method.

In the context of the present application the depth of the ground hole 2 from the ground surface 1 may be at least 300m, or at least 500m, or between 300m and 3000m, or between 500m and 2500m. Alternatively or additionally, the ground hole 2 extends into the ground to a depth in which the temperature is at least 15 °C, or approximately 20 °C, or at least 20 °C.

The ground hole 2 may extend to a depth under the water table in the ground, meaning through the water table. Alternatively, the ground hole 2 may extend to a depth above the water table in the ground.

It should be noted that in the figures similar structural part and structures are denoted with same reference numerals and their description is not repeated in relation to every figure.

It should be noted that according to the present invention the geothermal heat exchanger may be used in heat extraction mode or in heat charging mode.

Further, in the present application the ground hole 2 may be any kind of hole extending into the ground it may be vertical hole, straight vertical or otherwise straight hole extending into the ground in an angle to the ground surface 1 or to the vertical direction. Furthermore, the ground hole 2 may be may have one or more bends and the direction of the ground hole may change one or more times along the length of the ground towards the lower end or bottom of the ground hole 2. Additionally, it should be noted that shape or form a rise pipe and a drain pipe may of a geothermal heat exchanger preferably conform the shape or form of the ground hole 2, at least substantially, in order to provide proper installation of the rise pipe and the drain pipe into the ground hole 2. Preferably, the ground hole 2 extends to a depth as mentioned above, but it may one or more bends along the length or it may be straight.

The ground material at the lower end 4 of the ground hole 2 is usually rock material. Accordingly, the ground or the rock material of the ground may form surface of the ground hole 2 or inner surface of a rise pipe or a drain pipe of a geothermal heat exchanger along at least part of the length of the rise pipe or the drain pipe of the geothermal heat exchanger.

There is a geothermal heat exchanger 55 arranged in connection with the ground hole 2. The geothermal heat exchanger 55 comprises a piping arrangement in which a working fluid is circulated. The piping arrangement usually comprises a closed loop piping arranged to provide closed circulation of the working fluid. The working fluid is usually a liquid, such as water or methanol or ethanol based working fluid. The piping arrangement comprises a rise pipe 11 and a drain pipe 21 arranged into the ground hole 2 such that they extend from the ground surface 1 towards a bottom 4 of the ground hole 2. The rise pipe 11 and the drain pipe 21 are in fluid communication with each other at the lower ends of the rise pipe 11 and the drain pipe 21 or at the lower end 4 of the ground hole 2 for circulating the working fluid in ground hole 2 between the rise pipe 11 and the drain pipe 21. There may be one or more rise pipes 11 and drain pipe 21 arranged into the same or different ground holes 2.

In the embodiment of figure 1, there is no separate drain pipe 21, but the ground hole 2 is arranged to form the drain pipe 21. This enables efficient heat transfer between the geothermal working fluid and the ground. In this embodiment, the ground may be formed from rock enabling using the ground as the drain pipe 21. In this embodiment, the rise pipe 11 is arranged inside the drain pipe 21. The rise pipe 11 and the drain pipe 21 may be arranged inside each other or coaxially and/or parallel to each other and within each other. However, it should be noted that similarly the drain pipe 21 could be arranged inside the rise pipe 11.

The heat pump 30 and the rise pipe 11 may be connected to each other with a first connection pipe 3 and the heat pump 30 and the drain pipe 21 may be connected to each other with a second connection pipe 5. The first connection pipe 3 may form part of the rise pipe 11 and the second connection pipe 5 may form part of the drain pipe 5.

The geothermal heat exchanger 55 of figure 1 comprises a first pump 8 arranged to the piping arrangement for circulating the working fluid in the piping arrangement in the heat charging mode of the geothermal heat exchanger 55 in which the working fluid is circulated in the direction towards the lower end 17 of the rise pipe 11 or downwards in the rise pipe 11 and upwards the drain pipe 21, as shown with arrows 22 and 12. The first pump 8 may be any kind of known pump capable of circulating the working fluid. The geothermal heat exchanger 55 further comprises a second pump 9 arranged to circulate the working fluid in a direction downwards the drain pipe 21 and upwards the rise pipe 11, when the geothermal heat exchanger and the geothermal heat arrangement are in heat extraction mode. The second pump 9 may be any kind of known pump capable of circulating the working fluid. Accordingly, the first pump 8 is arranged to operate in the heat charging mode and the second pump 9 in the heat extraction mode.

The first pump 8 may be arranged to or in connection with the first connection pipe 3 or the to the rise pipe 11. The second pump 9 may be arranged to or in connection with the second connection pipe 5 or the to the drain pipe 21.

Figure 1 shows the geothermal heat exchanger 55 in heat extraction mode in which the working fluid receives heat energy from the ground in the ground hole 2 and circulates the heated working fluid upwards in the rise pipe 11, as shown with arrow 22. The working fluid releases the heat energy in the heat pump 30, for example to a building space. Thus, a cool working fluid flow 54 receives heat energy in the heat pump 30 and becomes as heated working fluid flow 52. At the same time the temperature of the working fluid flow circulating the geothermal heat exchanger 55 decreases and the cooled working fluid returns to the ground hole 2 along the drain pipe 21, and again receives thermal energy from the ground as indicated with arrows C. Thus, when the geothermal heat exchanger operates in heat extraction mode, the heat pump 30 operates in the heating mode in which the working fluid receives heat energy from the geothermal heat exchanger 55.

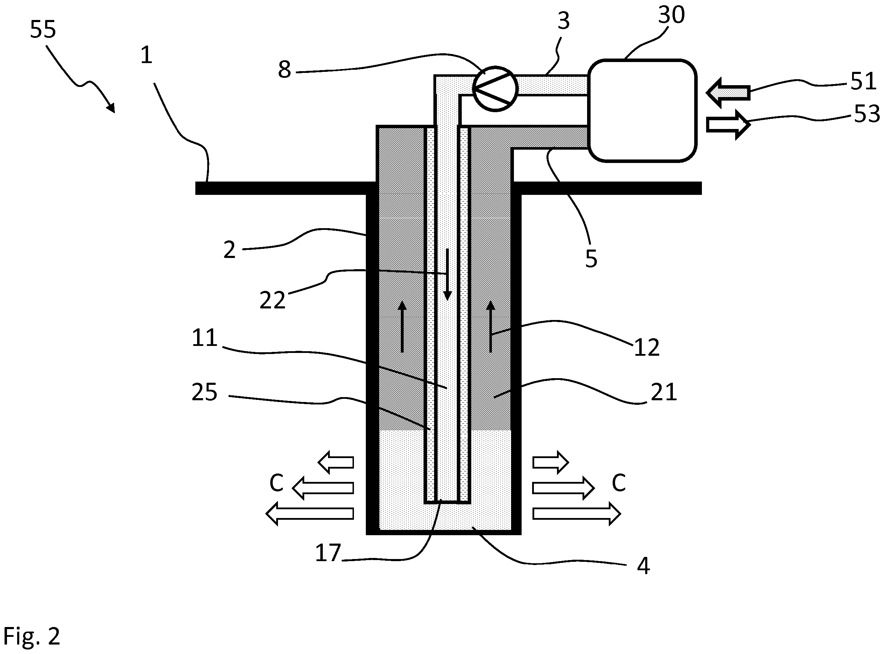

Figure 2 shows the geothermal heat exchanger 55 in heat charging mode in which the working fluid releases heat energy to the ground in the ground hole 2 and circulates the cooled working fluid upwards in the drain pipe 21, as shown with arrow 12. The working fluid receives the heat energy in the heat pump 30, for example from a building space. Thus, a heated primary working fluid flow 51 releases heat energy in the heat pump 30 and becomes as cooled primary working fluid flow 53. At the same time the temperature of the working fluid flow circulating the geothermal heat exchanger 55 increases and the heated working fluid returns to the ground hole 2 along the rise pipe 11, and again releases thermal energy to the ground as indicated with arrows C. Thus, when the geothermal heat exchanger operates in heat charging mode, the heat pump 30 operates in the cooling mode in which the primary working fluid releases heat energy to the geothermal heat exchanger 55.

In the embodiment of figure 2, there is only the first pump 8. The first pump 8 may a reversible pump arranged to pump the working fluid in a direction downwards the rise pipe 10 and upwards the drain pipe 20, or alternatively in direction downwards the drain pipe 20 and upwards the rise pipe 10. The first one is the charging mode in which thermal energy is charged to the ground and the second is a reverse mode, meaning extraction, mode in which charged thermal energy is extracted from the ground.

As shown in figures 1 and 2, a first thermal insulation 25 extends from the ground surface 1 to the lower end 17 of the rise pipe 11 along the rise pipe 11. Thus, the first thermal insulation 25 may extend along the entire length of the rise pipe 11, at least inside the ground hole 2 or the drain pipe 21. The first thermal insulation 25 may also extend along the entire length of the rise pipe 11. In these embodiments, the rise pipe 11 may be an evacuated tube comprising a vacuum layer surrounding the flow channel of the rise pipe 11. Thus, the vacuum layer is arranged to form the first thermal insulation 25. It may also be provided with any other insulating material. The rise pipe 11 may comprise an inner pipe wall, an outer pipe wall and an insulation material layer 25 provided between the inner pipe wall and the outer pipe wall of the rise pipe 11.

The thermal insulation layer or the first thermal insulation 25 may be formed any suitable material preventing or decreasing heat exchange of the working fluid. The thermal insulation means material capable insulating against transmission of heat, or material of relatively low heat conductivity used to shield the fluid against loss or entrance of heat by radiation, convection, or conduction. Several different thermal insulation materials or vacuum may be used.

The first thermal insulation 25 decreases or minimizes heat transfer to and from the working fluid flow 22 in the rise pipe 11 such that the working fluid may be transported in heated form or in elevated temperature to the lower end 17 of the first pipe 11 and the lower end 4 of the ground hole 2 in the heat charging mode. Accordingly, the working fluid releases thermal energy C at elevated temperature to the ground surrounding the ground hole 2 at the lower end 4 of the ground hole 2 and thus charges thermal energy to the ground for later use, as shown in figure 2. This applies to all embodiment in which the first thermal insulation 25 is used. Furthermore, first thermal insulation 25 decreases or minimizes heat transfer to and from the working fluid flow 22 in the rise pipe 11 such that the working fluid may be transported in heated form or in elevated temperature from the lower end 17 of the first pipe 11 and the lower end 4 of the ground hole 2 in the heat extraction mode, to the ground surface 1. Accordingly, the working fluid receives thermal energy C at elevated temperature from the ground surrounding the ground hole 2 at the lower end 4 of the ground hole 2 and thus extracts thermal energy from the ground to be transported to the heat pump 30. This applies to all embodiment in which the first thermal insulation 25 is used

It should be noted, that also the drain pipe 21 may be provided with a second thermal insulation extending from the ground surface towards the lower end 4 of the ground hole 2 in similar manner as the first thermal insulation 25.

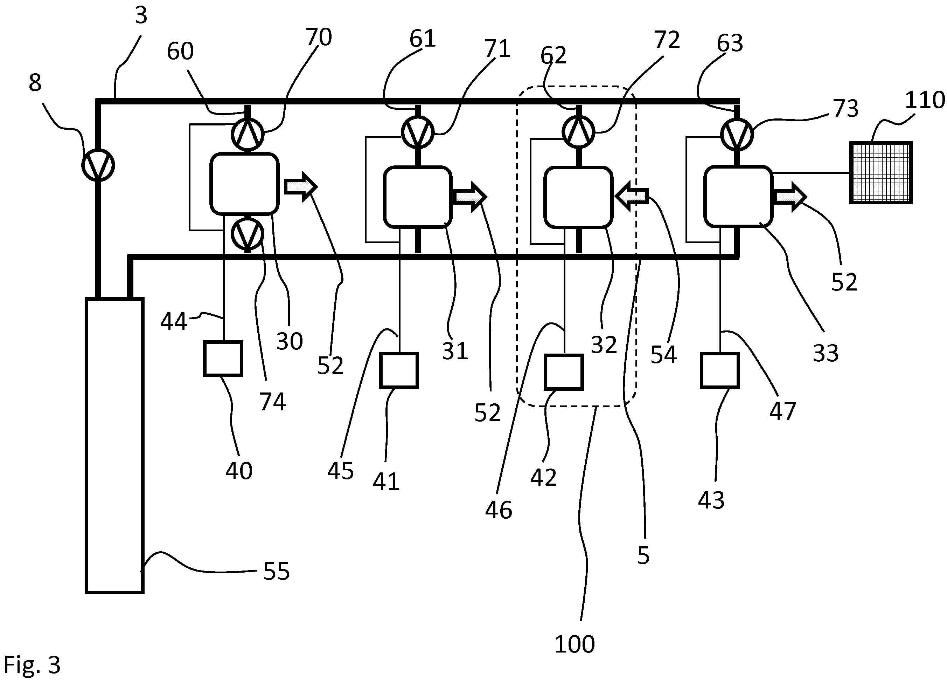

Figure 3 shows one embodiment used by the present invention. The present invention provides a a method for heating and cooling system for conditioning several building spaces. The system comprises a secondary thermal network 3, 5 for circulating secondary working fluid. The secondary thermal network comprises a supply line 3 in which high-temperature secondary working fluid is circulated and return line 5 in which low-temperature secondary working fluid is circulated. In the secondary thermal network the supply line 3 and the return line 5 are connected to each other with two or more connection lines or pipes 60, 61, 62, 63. The two or more connection lines or pipes 60, 61, 62, 63 arranged between the supply line 3 and the return line 5 and arranged to connect the supply line 3 and the return line 5 to each other such that the secondary thermal working fluid may flow between the supply line 3 and the return line 5 via the two or more connection lines 60, 61, 62, 63. Accordingly, the connection lines 60, 61, 62, 63 are arranged parallel to each other to the secondary thermal network and between the supply line 3 and the return line 5.

Two or more of the connection lines 60, 61, 62, 63 is provided with a primary heat exchanger 30, 31, 32, 33. The primary heat exchangers 30, 31, 32, 33 are arranged to provide a primary heat exchange connection between the secondary thermal network and a building space or building. Thus, the primary heat exchangers 30, 31, 32, 33 are provided in connection with buildings or building spaces. Thus, the parallel primary heat exchangers 30, 31, 32, 33 may utilize the secondary working fluid circulating in the supply line 3 and the return line 5 for the primary heat exchange for the buildings or building spaces.

The system further comprises at least one geothermal heat exchanger 55 arranged in connection with the secondary thermal network. The geothermal heat exchanger 55 is provided with a geothermal network 92 for circulating geothermal working fluid in the geothermal heat exchanger 55 and in the ground hole 2.

The rise pipe 10, 11 and the drain pipe 20, 21 may form the geothermal network 92.

The geothermal heat exchanger 55 is preferably connected between the supply line 3 and the return line 5 directly or in heat exchange connection such that that the geothermal heat exchanger 55 may receive and release heat energy to and from the secondary thermal network.

In figure 3, the geothermal heat exchanger 55 comprises the rise pipe 10, 11 and the drain pipe 20, 21 and the geothermal heat exchanger is directly connected to the secondary thermal network. Thus, the supply line 3 of the secondary thermal network is connected to the rise pipe 10, 11 and arranged in fluid communication with the rise pipe 10, 11 for allowing secondary working fluid flow between the rise pipe 10, 11 and the supply line 3. Similarly, the return line 5 of the secondary thermal network is connected to the drain pipe 20, 21 and arranged in fluid communication with the drain pipe 20, 21 for allowing secondary working fluid flow between the drain pipe 20, 21 and the return line 5.

Accordingly, in this embodiment the geothermal heat exchanger 55 is connected to the secondary thermal network 3, 5, 60, 61, 62, 63, and the geothermal heat exchanger 55 and the secondary thermal network 3, 5, 60, 61, 62, 63 are arranged in fluid communication with each other for circulating the secondary working fluid in the geothermal heat exchanger 55

The connection lines 60, 61, 62, 63 are provided with a connection pump 70, 71, 72, 73 arranged to circulate the secondary working fluid between the supply line 3 and the return line 5. Thus, at least one of the two or more connection lines 60, 61, 62, 63 is provided with a first connection pump 70, 71, 72, 73 arranged to circulate the secondary working fluid in a direction from the supply line 3 to the return line 5, and with a second connection pump 74 arranged to circulate the secondary working fluid in a direction from the return line 5 to the return line 3. Alternatively, at least one of the two or more connection lines 60, 61, 62, 63 is provided with a first connection pump 70, 71, 72, 73 which is a reversible pump arranged to selectively circulate the secondary working fluid in a direction from the supply line 3 to the return line 5 and in a direction from the return line 5 to the return line 3.

In the heating mode of the primary heat exchanger 30, 31, 33, the secondary working fluid releases heat energy to the building or building space, as shown in figure 3 with arrows 52. Then the secondary working fluid is circulated from the supply line 3 via the connection lines 60, 61, 63 and the primary heat exchangers 30, 31, 33 to the return line 5. In the cooling mode of the primary heat exchanger 32, the secondary working fluid receives heat energy from the building or building space, as shown in figure 3 with arrow 54. Then the secondary working fluid is circulated from the return line 5 via the connection line 62 and the primary heat exchanger 32 to the supply line 3.

It should be noted, that each of the primary heat exchangers 30, 31, 32, 33 may be operated in the cooling mode or in the heating mode. Therefore, the parallel primary heat exchangers 30, 31, 32, 33 are arranged in heat exchange connection with each other via the secondary thermal network and the supply line 3 and the return line 5. Thus, the primary heat exchangers(s) 32 operated in cooling mode may supply heat energy to the supply line 3 and this heat energy may be utilized by the primary heat exchangers 30, 31, 33 in the heating mode.

The geothermal heat exchanger 55 may be operated in the heat extraction mode or in the heat charging mode based on a net or overall heat energy demand of the parallel primary heat exchangers 30, 31, 32, 33. When the primary heat exchangers 30, 31, 33 operated in the heating mode need more heat energy from the secondary thermal network than the primary heat exchanger(s) 32 operated in the cooling mode supplies to the secondary thermal network, then the geothermal heat exchanger 55 may be operated in heat extraction mode. Alternatively, when the primary heat exchangers 30, 31, 33 operated in the heating mode less heat energy from the secondary thermal network than the primary heat exchanger(s) 32 operated in the cooling mode supplies to the secondary thermal network, then the geothermal heat exchanger 55 may be operated in heat charging mode.

The system may comprise the first pump 8, the first pump being a reversible pump arranged to selectively operate the geothermal heat exchanger 55 in a heat extraction mode in which the secondary working fluid is circulated downwards in the drain pipe 21 and upwards in the rise pipe 11 in a heat charging mode in which the secondary working fluid is circulated downwards in the rise pipe 11 and upwards in the drain pipe 21. The fist pump 8 may be provided to the supply line 3, or return line 5, or rise pipe 11 or drain pipe 21.

Alternatively, in the embodiment of figure 3, in which the secondary working fluid is also circulated in the geothermal heat exchanger 55, the first connection pumps 70, 71, 72, 73 provided to the connection lines 60, 61, 62, 63 or in connection with the primary heat exchangers 30, 31, 32, 33 may be arranged to circulate the secondary working fluid in the geothermal heat exchanger 55 and the first pump 8 may be omitted. This may be advantageous, as the system and the use of the geothermal heat exchanger 55 becomes automated based on the net heat energy demand of the primary heat exchangers 55.

The primary heat exchanger 30, 31, 32, 33 may be a heat pump or any other known type of heat exchanger.

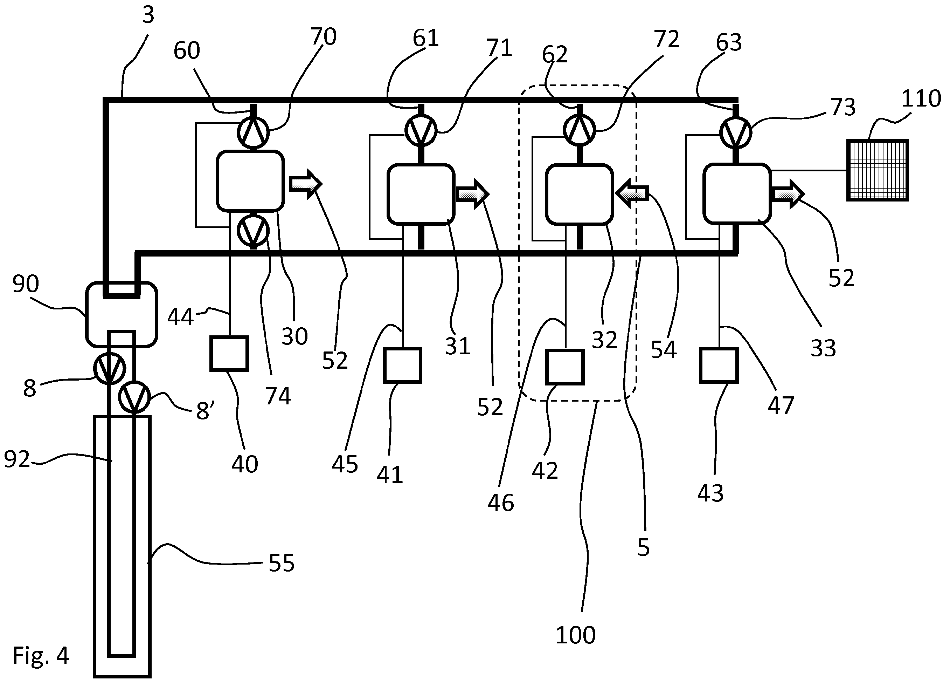

Figure 4 shows an alternative embodiment of figure 3. In this embodiment, the heating and cooling system or arrangement further comprises a secondary heat pump 90 arranged between the secondary thermal network 3, 5, 60, 61, 62, 63 and the geothermal network 11, 21, 92. The secondary heat pump 90 is arranged to provide secondary heat exchange connection between the secondary working fluid and the geothermal working fluid, and between the geothermal network 92 and the secondary thermal network 3, 5, 60, 61, 62, 63. Accordingly, the circulation of the secondary working fluid and the geothermal working fluid, as well as the geothermal network (or the geothermal heat exchanger 55) and the secondary thermal network are separated from each other with the secondary heat pump 90. Therefore, the geothermal heat exchanger 55, or the geothermal network 92, is arranged in secondary heat exchange connection with the secondary thermal network 3, 5, 60, 61, 62, 63, and the secondary heat pump 90 is provided between the geothermal heat exchanger 55, or the geothermal network 92, and the secondary thermal network 3, 5, 60, 61, 62, 63 for providing heat exchange between secondary thermal network 3, 5, 60, 61, 62, 63 and the geothermal heat exchanger 55. Thus, the geothermal network 92 is connected to the secondary heat pump 90 and the secondary thermal network 3, 5, 60, 61, 62, 63 is also connected to the secondary heat pump 90 for providing the secondary heat exchange connection and for carrying out heat transfer between the geothermal network 92 and the secondary thermal network 3, 5, 60, 61, 62, 63, and the geothermal working fluid and the secondary working fluid.

Therefore, in the heat extraction mode of the geothermal heat exchanger 55 heat energy is transferred from the geothermal network 92 and the geothermal working fluid to the secondary thermal network 3, 5, 60, 61, 62, 63 and the secondary working fluid in the secondary heat pump 90. Similarly, in the heat charging mode of the geothermal heat exchanger 55 heat energy is transferred from the secondary thermal network 3, 5, 60, 61, 62, 63 and the secondary working fluid to the geothermal network 92 and the geothermal working fluid in the secondary heat pump 90.

The secondary heat pump 90 enables the geothermal network 92 and the secondary thermal network 3, 5, 60, 61, 62, 63 to be operated in different temperatures. Further, the secondary heat pump 90 enables utilizing also small temperature differences and small thermal energy amounts together with the geothermal heat exchanger 55.

The secondary heat pump 90 may be replaced with a secondary heat exchanger.

The geothermal heat exchanger 55 of figure 4 comprises a first pump 8 arranged to the piping arrangement for circulating the working fluid in the piping arrangement in the heat charging mode of the geothermal heat exchanger 55 in which the working fluid is circulated in the direction towards the lower end 17 of the rise pipe 11 or downwards in the rise pipe 11 and upwards the drain pipe 21, as shown with arrows 22 and 12. The first pump 8 may be any kind of known pump capable of circulating the working fluid. The geothermal heat exchanger 55 further comprises a second pump 8' arranged to circulate the working fluid in a direction downwards the drain pipe 21 and upwards the rise pipe 11, when the geothermal heat exchanger and the geothermal heat arrangement are in heat extraction mode. The second pump 8' may be any kind of known pump capable of circulating the working fluid. Accordingly, the first pump 8 is arranged to operate in the heat charging mode and the second pump 8' in the heat extraction mode.

Thus, the geothermal network is provided with the first pump 8 and the second pump 8'. Further, the first pump 8 may be reversible pump and the second pump 8' may be omitted.

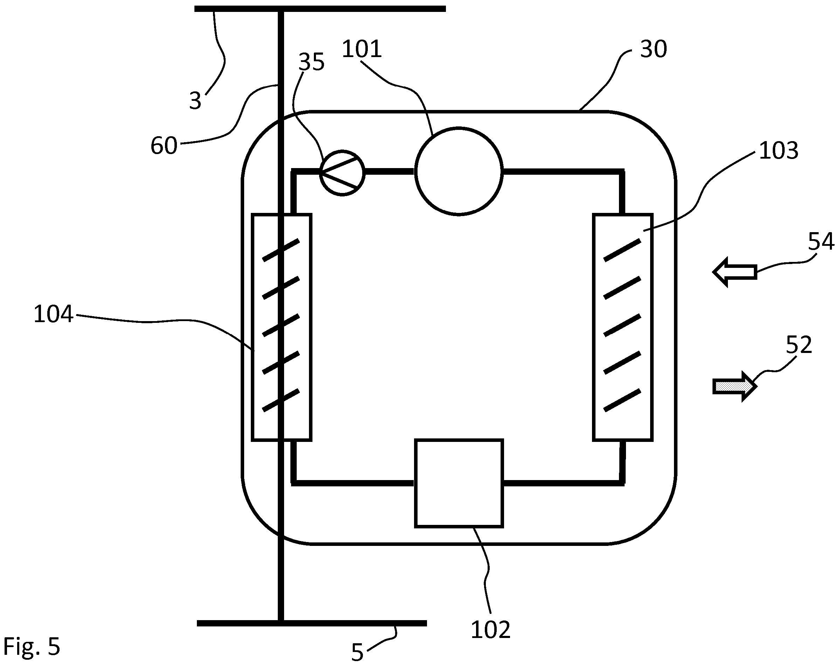

Figure 5 shows schematically one embodiment of the primary heat pump 30 arranged to the connection line 60 and between the supply line 3 and the return line 5.

In the heating mode of the heat pump 30 and in heat extraction mode of the geothermal heat exchange, in the heat pump 30 the secondary working fluid releases thermal energy to the heat pump working fluid. The heat pump working fluid receives thermal energy from the secondary working fluid in a secondary heat exchange connection 104 of the heat pump 30. The heat pump working fluid may be any suitable fluid such as refrigerant. The heat pump 30 may comprise a pump 35 provided to the heat pump 30 for circulating the heat pump working fluid in the heat pump 30.

The secondary heat exchange connection 104 may be an evaporator and the liquid heat pump working fluid receives or absorbs thermal energy from the secondary working fluid in the evaporator 104 and the heat pump working fluid is turned into gas or becomes gas. Then the gaseous heat pump working fluid flows or is circulated into a compressor 101 arranged to raise the pressure and increase the temperature of the gaseous heat pump working fluid.

Then the gaseous heat pump working fluid releases thermal energy to a primary working fluid of the building space or building in a primary heat exchange connection 103 of the heat pump 30. The primary working fluid receives thermal energy from the heat pump working fluid in the primary heat transfer connection 103.

The primary heat exchange connection 103 may be a condenser and the gaseous heat pump working fluid may condense back to liquid as it releases thermal energy to the primary working fluid. Then the liquid heat pump working fluid flows or is circulated to an expansion device 102 in which the pressure of the liquid heat pump working fluid is reduced and the temperature decreased.

In the heating mode of the heat pump 30 cold primary working fluid flow 54 is received into the heat pump 30 from the building or the building space and it receives thermal energy in the primary heat exchange connection 103 such that the temperature of the primary working fluid increases. Then the heated primary working fluid flow 52 is supplied to the building or the building space.

Then heat pump working fluid flows or is circulated back to the secondary heat transfer connection 104 and the cycle is repeated.

The secondary working fluid releases thermal energy in the heat pump 30, or in the secondary heat transfer connection 104 of the heat pump 30. The thermal energy is released and received to the heat pump working fluid. Therefore, the temperature of the secondary working fluid decreases in the heat pump 30 or as it flows through the heat pump 30 or the secondary heat exchange connection 104. The secondary working fluid is circulated from the supply line 3 to the heat pump 30 and further to the return line 5, and it releases heat energy in the heat pump 30 and the temperature of the secondary working fluid is decreased.

When the heat pump 30 is operated in the cooling mode, the heat pump 30 receives or absorbs heat energy from the primary working fluid of the building or the building space. In the cooling mode the primary heat exchange connection 103 is arranged to transfer thermal energy from the heat pump working fluid to the primary working fluid such that the temperature of the primary working fluid decreases and the temperature of the heat pump working fluid increases.

Liquid heat pump working fluid receives or absorbs thermal energy from the primary working fluid of the building space or building in the primary heat exchange connection 103 of the heat pump 30. Thus, a warm or hot flow of primary working fluid releases thermal energy to the liquid heat pump working fluid in the primary heat transfer connection 103. The primary working fluid cools down or the temperature of the primary working fluid decreases. The cool primary working fluid flow flows back from the heat pump 30 to the building or the building space.

The primary heat exchange connection 103 may be now an evaporator. The liquid heat pump working fluid receives or absorbs thermal energy from the primary working fluid in the evaporator and evaporates to gas forming gaseous heat pump working fluid.

The gaseous heat pump working fluid flows or is circulated to the compressor 101. The compressor 101 is arranged to raise the pressure and to increase the temperature of the gaseous working fluid. From the compressor 101 the gaseous heat pump working fluid flows or is circulated to the secondary heat exchange connection 104. In the secondary heat exchange connection 104 high-temperature heat pump working fluid releases heat energy to the secondary working fluid in the secondary heat exchange connection 104. Therefore, the temperature of the heat pump working fluid decreases and the heat pump working fluid returns to liquid state.

The secondary heat exchange connection 104 may be now the condenser. The gaseous heat pump working fluid releases thermal energy to the secondary working fluid in the condenser and turns into liquid forming liquid heat pump working fluid.

It should be noted, that in the context of the present invention the heat pump 30 may comprise only the primary and secondary heat transfer connections 103, 104. Furthermore, the primary and secondary heat transfer connections 103, 104 may comprise any know kind of heat exchangers. Accordingly, the present invention is not limited to any particular kind of heat pump 30. The heat pump 30 may be liquid-to-liquid heat pump in which both the geothermal working fluid and the primary working fluid are liquids, or liquid-to-gas (or liquid-to-air) heat pump in which the geothermal working fluid is liquid and the primary working fluid is gas, such as air.

Further, in some embodiments the heat pump 30 may be replaced or it may be a heat exchanger in which the thermal energy is transferred directly between the secondary working fluid and the primary working fluid of the building space or the building. The flow of the secondary working fluid in the connection lines 60, 61, 62, 63 is carried out based on the heating and cooling modes. Alternatively, the heat pump 30 may be replaced or it may be any known kind of heat exchange connection provided between the primary working fluid and the secondary working fluid.

Additionally it should be noted, that the heat pump working fluid could also be omitted and the primary working fluid or the secondary working fluid could be circulated in the heat pump 30 via the compressor 101, the expansion device 102 and the primary and secondary heat exchange connections 103, 104.

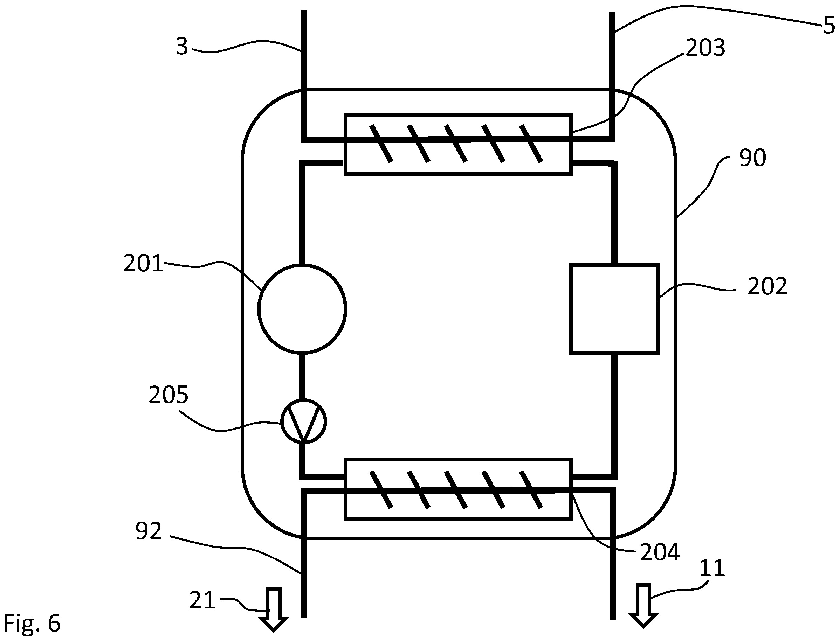

Figure 6 shows schematically one embodiment of the secondary heat pump 90 arranged between the geothermal network 92 and the secondary thermal network 3, 5.

In heat extraction mode of the geothermal heat exchanger 55 the geothermal working fluid flowing in the geothermal network 92 releases thermal energy in the secondary heat pump 90 to the heat pump working fluid. The heat pump working fluid receives thermal energy from the geothermal working fluid in a secondary heat exchange connection 204 of the secondary heat pump 90. The heat pump working fluid may be any suitable fluid such as refrigerant. The secondary heat pump 90 may comprise a pump 205 provided to the secondary heat pump 90 for circulating the heat pump working fluid in the secondary heat pump 90. The geothermal working fluid is circulated in the geothermal network upwards the rise pipe 11 to the secondary heat pump 90.

The secondary heat exchange connection 204 may be an evaporator and the liquid heat pump working fluid receives or absorbs thermal energy from the geothermal working fluid in the evaporator 204 and the heat pump working fluid is turned into gas or becomes gas. Then the gaseous heat pump working fluid flows or is circulated into a compressor 201 arranged to raise the pressure and increase the temperature of the gaseous heat pump working fluid.

Then the gaseous heat pump working fluid releases thermal energy to a secondary working fluid flowing in the secondary thermal network 3, 5 in a primary heat exchange connection 203 of the secondary heat pump 90. The secondary working fluid receives thermal energy from the heat pump working fluid in the primary heat transfer connection 203. The secondary working fluid flows to the secondary heat pump 90 from the return line 5 and back to the supply line 3 via the primary heat exchange connection 203 in elevated temperature.

The primary heat exchange connection 203 may be a condenser and the gaseous heat pump working fluid may condense back to liquid as it releases thermal energy to the primary working fluid. Then the liquid heat pump working fluid flows or is circulated to an expansion device 202 in which the pressure of the liquid heat pump working fluid is reduced and the temperature decreased.

In the heat charging mode of the geothermal heat exchanger 55 the geothermal working fluid flowing in the geothermal network 92 receives thermal energy in the secondary heat pump 90 from the heat pump working fluid. The heat pump working fluid releases thermal energy to the geothermal working fluid in the secondary heat exchange connection 204 of the secondary heat pump 90. The heated geothermal working fluid is circulated in the geothermal network downwards the rise pipe 11 from the secondary heat pump 90.

In secondary heat pump 90 heated secondary working fluid flow is received into the secondary heat pump 90 from secondary thermal network 3, 5, or the supply line 3, and it releases thermal energy in the primary heat exchange connection 203 such that the temperature of the secondary working fluid decreases. Then the secondary working fluid flows to the return line 5.

Then heat pump working fluid flows or is circulated back to the secondary heat transfer connection 204 and the cycle is repeated.

The secondary working fluid releases thermal energy in the secondary heat pump 90, or in the secondary heat transfer connection 204 of the secondary heat pump 90. The thermal energy is released and received to the heat pump working fluid. Therefore, the temperature of the secondary working fluid decreases in the secondary heat pump 90 or as it flows through the secondary heat pump 90 or the secondary heat exchange connection 204. The secondary working fluid is circulated from the supply line 3 to the secondary heat pump 50 and further to the return line 5, and it releases heat energy in the secondary heat pump 90 and the temperature of the secondary working fluid is decreased.

When the geothermal heat exchanger 55 is operated in the heat charging mode, the secondary heat pump 90 receives or absorbs heat energy from the secondary working fluid in the secondary thermal network 3, 5. The primary heat exchange connection 203 is arranged to transfer thermal energy from secondary working fluid to the heat pump working fluid such that the temperature of the secondary working fluid decreases and the temperature of the heat pump working fluid increases.

Liquid heat pump working fluid receives or absorbs thermal energy from the secondary working fluid of the secondary thermal network in the primary heat exchange connection 203 of the secondary heat pump 90. Thus, a warm or hot flow of secondary working fluid releases thermal energy to the liquid heat pump working fluid in the primary heat transfer connection 203. The secondary working fluid cools down or the temperature of the secondary working fluid decreases. The cool secondary working fluid flow flows back from the secondary heat pump 30 to the return line 5.

The primary heat exchange connection 203 may be now an evaporator. The liquid heat pump working fluid receives or absorbs thermal energy from the primary working fluid in the evaporator and evaporates to gas forming gaseous heat pump working fluid.

The gaseous heat pump working fluid flows or is circulated to the compressor 201. The compressor 201 is arranged to raise the pressure and to increase the temperature of the gaseous working fluid. From the compressor 201 the gaseous heat pump working fluid flows or is circulated to the secondary heat exchange connection 204. In the secondary heat exchange connection 204 high-temperature heat pump working fluid releases heat energy to the geothermal working fluid in the secondary heat exchange connection 204. Therefore, the temperature of the heat pump working fluid decreases and the heat pump working fluid returns to liquid state.

The secondary heat exchange connection 204 may be now the condenser. The gaseous heat pump working fluid releases thermal energy to the geothermal working fluid in the condenser and turns into liquid forming liquid heat pump working fluid.

It should be noted, that in the context of the present invention the secondary heat pump 90 may comprise only the primary and secondary heat transfer connections 203, 204. Furthermore, the primary and secondary heat transfer connections 203, 204 may comprise any know kind of heat exchangers. Accordingly, the present invention is not limited to any particular kind of secondary heat pump 90. The secondary heat pump 90 may be liquid-to-liquid heat pump in which both the geothermal working fluid and the primary working fluid are liquids, or liquid-to-gas (or liquid-to-air) heat pump in which the geothermal working fluid is liquid and the primary working fluid is gas, such as air.

As shown in figures 3 and 4, the system may further comprise solar electricity apparatus 110 provided in connection with the building or the building space and connected to the primary heat pump 33 for supplying electricity to the primary heat pump 33 and for operating the primary heat pump 33. There may also or alternatively a solar electricity apparatus 110 may also be connected to the secondary heat pump 90 in the embodiment of figure 4.

As shown in figures 3 and 4, the present invention provides a method using an arrangement for heating and cooling of two or more buildings or building spaces.

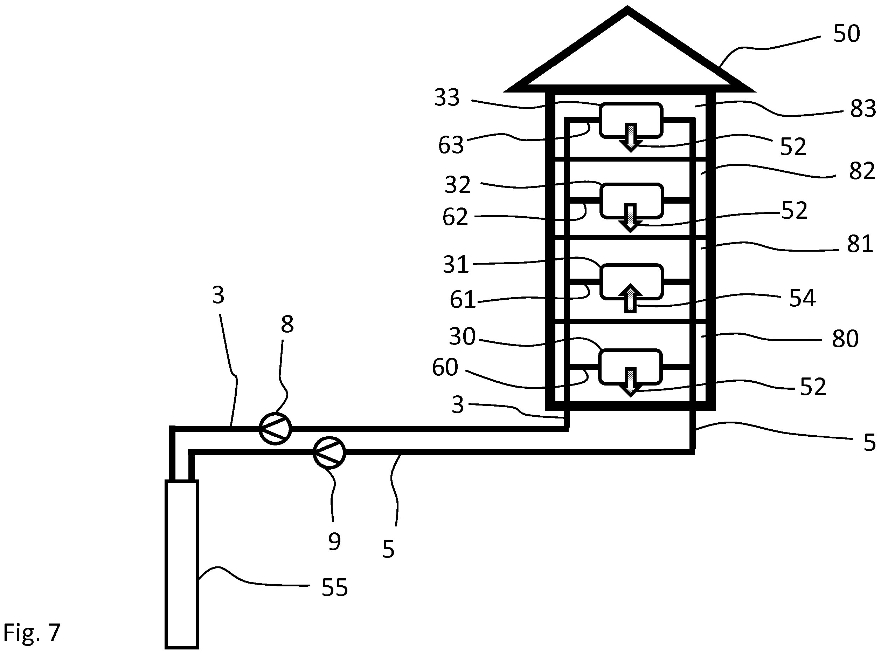

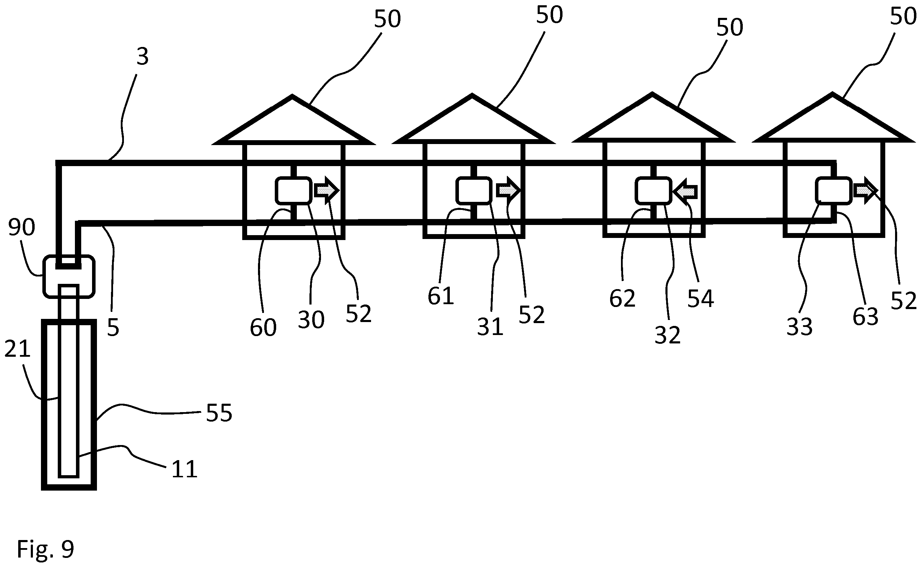

The arrangement comprises two or more building spaces 80, 81, 82, 83 or buildings 50, as shown for example in figures 7 and 9. The arrangement further comprises the secondary thermal network for circulating secondary working fluid. The secondary thermal network comprises the supply line 3 for circulating high-temperature secondary working fluid and the return line 5 for circulating low-temperature secondary working fluid. The arrangement further comprises two or more building connections 100 shown with dotted lines in figures 3 and 4. The two or more building connections 100 are arranged parallel to each other and between the supply line 3 and the return line 5 of the secondary thermal network. The two or more building connections 100 comprise the primary heat exchangers 30, 31, 32, 33 provided in connection with the two or more building spaces 80, 81, 82, 83 or buildings 50. Thus, the two or more buildings 50 or building spaces 80, 81, 82, 83 are connected, or in heat exchange connection with each other via the building connections 100 and the supply line 3 and the return line 5.

The building connections 100 may comprises the connection lines 60, 616, 62, 63 and the connection pumps 70, 71, 72, 73, 74, as disclosed above.

The building connection 100 may be further provided control devices 40, 41, 42, 43 connected with control lines 44, 45, 46, 47 to the primary heat exchangers 30, 31, 32, 33 and/or to the connection pumps 70, 71, 72, 73, respectively. The control device 40, 41, 42, 43 may be arranged to operate the primary heat exchangers 30, 31, 32, 33 selectively in the cooling and heating modes.

The arrangement further comprises the ground hole 2 provided into the ground and extending from the ground surface 1 and the geothermal heat exchanger 55 provided to the ground hole 2 and arranged in connection with the secondary thermal network, as described above.

The building connection 100 or the primary heat exchangers 30, 31, 32, 33 of the two or more building connections 100 may be arranged in connection with different building spaces 80, 81, 82, 83 of one building 50, as shown in figure 7. Accordingly, the supply line 3 and the return line 5 continue in the building 50 and the building connection 100 or the primary heat exchangers 30, 31, 32, 33 are arranged parallel between the supply line 3 and the return line 5 and in connection with different building spaces 80, 81, 82, 83. Thus, the building spaces 80, 81, 82, 83 may be heated and/or cooled independently of each other and at the same time providing heat exchange connection between the building spaces 80, 81, 82, 83.

In figure 7, the system and arrangement comprises the geothermal heat exchanger 5 connected supply line 3 and the return line 5. In this embodiment, the system comprises a first pump 8 arranged to operate the geothermal heat exchanger 55 in a heat extraction mode in which the secondary working fluid is circulated downwards in the drain pipe 21 and upwards in the rise pipe 11, and a second pump 9 arranged to operate the geothermal heat exchanger 55 in a heat charging mode in which the secondary working fluid is circulated downwards in the rise pipe 11 and upwards in the drain pipe 21.

The building 50 or the building spaces 80 ,81, 82, 83 may comprise a building thermal network 52, 54 for heating the building spaces 80, 81, 82, 83. The buildings thermal network 52, 54 may be a ventilation system, liquid circulation heating system or the like arranged to circulate the primary working fluid of the building space 80, 81, 82, 83. The primary heat exchangers 30, 31, 32, 33 of the two or more building connections 100 may be connected to building space thermal networks 52, 54 of different building spaces 80, 81, 82, 83.

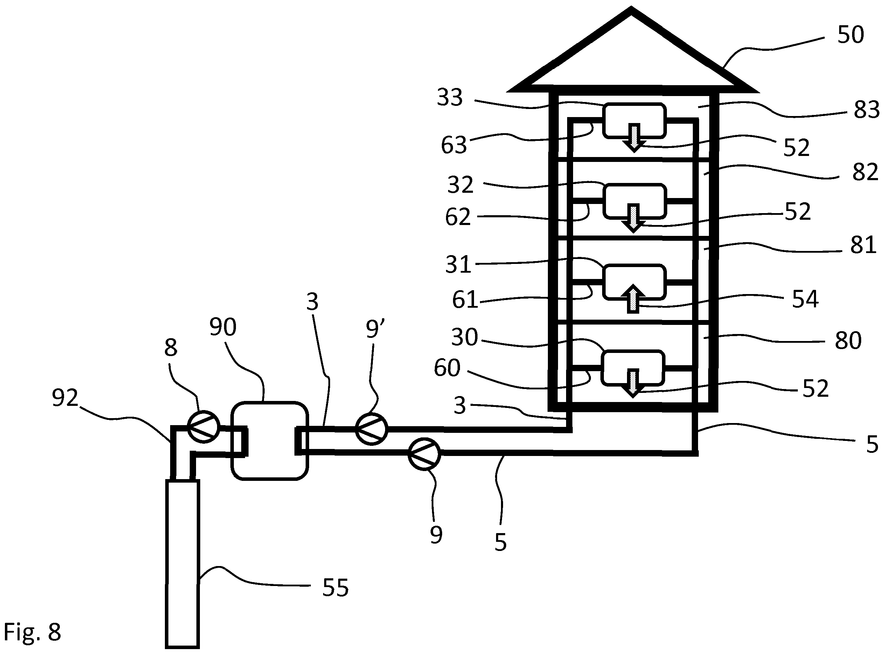

In figure 8, the system and arrangement comprises the geothermal heat exchanger 55 with a geothermal network 92. The secondary heat pump 90 is arranged between the geothermal network 92 and the secondary thermal network 3, 5 comprising the supply line 3 and the return line 5. In this embodiment, the system comprises a first pump 9 arranged to circulate the secondary working fluid in the heat charging mode of the geothermal heat exchanger 55 in which the secondary working fluid flows from the supply line 3 to the secondary heat pump 90. The system comprises also a first pump 9' arranged to circulate the secondary working fluid in the heat extraction mode of the geothermal heat exchanger 55 in which the secondary working fluid flows from the return line 5 to the secondary heat pump 90.

Embodiment of figure 8 is a modification of the embodiment of figure 7 with the secondary heat pump 90 or the secondary heat exchanger 90.

Figure 9 shows an alternative embodiment, in which the building connection 100 or the primary heat exchangers 30, 31, 32, 33 of the two or more building connections 100 may be arranged in connection with different building s 50. Accordingly, the supply line 3 and the return line 5 continue between the different buildings and the building connection 100 or the primary heat exchangers 30, 31, 32, 33 are arranged parallel between the supply line 3 and the return line 5 and in connection with different buildings. Thus, the buildings 50 may be heated and/or cooled independently of each other and at the same time providing heat exchange connection between the buildings 50.

In figure 9, the system and arrangement comprises the geothermal heat exchanger 55 connected supply line 3 and the return line 5 with the secondary heat pump 90. The geothermal heat exchanger 55 comprises the rise pipe 11 and the drain pipe 21 arranged to provide the geothermal network 92 for circulating geothermal working fluid along the rise pipe 11 and the drain pipe 21. The heating and cooling system or arrangement further comprises the secondary heat pump 90 arranged between the secondary thermal network 3, 5 and the geothermal network 92. The secondary heat pump 90 is arranged to provide secondary heat exchange connection between the secondary working fluid and the geothermal working fluid, and between the geothermal network 92 and the secondary thermal network 3, 5. Accordingly, the circulation of the secondary working fluid and the geothermal working fluid, as well as the geothermal network (or the geothermal heat exchanger 55) and the secondary thermal network 3, 5 are separated from each other with the secondary heat pump 90. Therefore, the geothermal heat exchanger 55 is arranged in heat exchange connection with the secondary thermal network 3, 5, 60, 61, 62, 63 and the secondary heat pump 90 is provided between the geothermal heat exchanger 55 and the secondary thermal network 3, 5, 60, 61, 62, 63 for providing heat exchange between secondary thermal network 3, 5, 60, 61, 62, 63 and the geothermal heat exchanger 55.

The buildings 50 may comprise a building thermal network 52, 54 for heating the buildings 50. The building thermal network 52, 54 may be a ventilation system, liquid circulation heating system or the like arranged to circulate the primary working fluid of the buildings 50. The primary heat exchangers 30, 31, 32, 33 of the two or more building connections 100 may be connected to building thermal networks 52, 54 of different buildings 50.

Thus, in figure 9 the two or more two or more building connections 100 or the primary heat exchangers 30, 31, 32, 33 of the two or more building connections 100 are arranged in connection with different buildings 50.

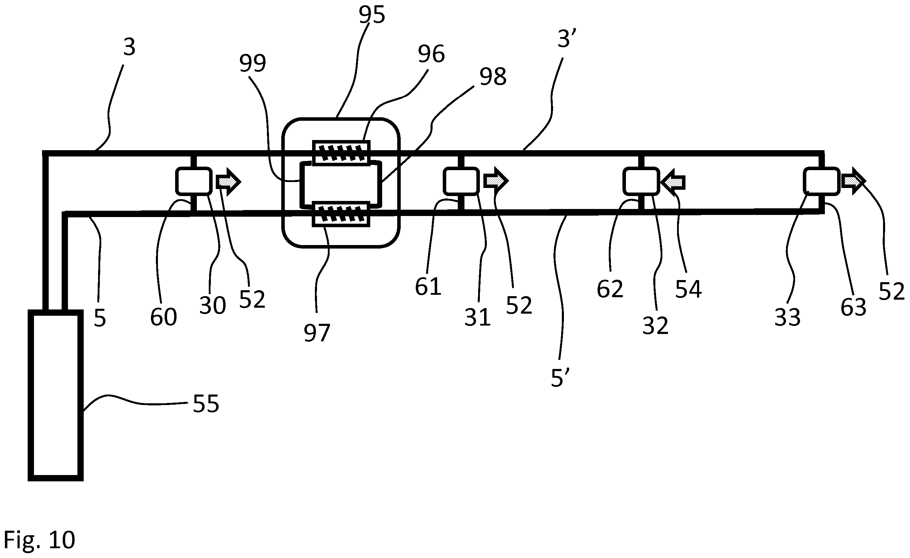

Figure 10 shows an embodiment in which the secondary thermal network 3, 3', 5, 5' comprises two secondary thermal sub-networks 3, 5 and 3', 5' arranged in heat exchange connection with each other. In figure 10 there is a first secondary thermal sub-network 3, 5 and a second secondary thermal sub-network 3', 5'. However, there may be two or more secondary thermal sub-networks. In the embodiment of figure 10, the secondary thermal sub-networks 3,5 and 3', 5' are arranged in fluid communication with each other such that the same secondary working fluid may flow in both secondary thermal sub-networks 3,5 and 3', 5'. Accordingly, the supply line 3 of the first secondary thermal sub-network is connected and in fluid communication with the supply line 3' of the second secondary thermal sub-network. Similarly, the return line 5 of the first secondary thermal sub-network is connected and in fluid communication with the return line 5' of the second secondary thermal sub-network.

In figure 10, the sub-network heat exchanger 95 divides the secondary thermal network to the first secondary thermal sub-network 3, 5 and to the second secondary thermal sub-network 3', 5'. The sub-network heat exchanger 95 may be sub-network heat pump 95 arranged between the supply line 3, '3' and the return line 5, 5' allowing heat exchange between the supply line 3, 3' and the return line 5, 5'. The sub-network heat pump 95 comprise sub-network heat exchanger fluid circuit 98, 99 and a first sub-network heat exchange connection 96 and a second sub-network heat exchange connection 97 such that heat energy may be exchanged between the supply line 3, 3' and the return line 5, 5'. Thus, the sub-network heat exchanger 95 divides the secondary thermal network to secondary thermal sub-networks and allows adjusting the temperature of the secondary working fluid. Accordingly, the sub-network heat exchanger 95 may raise the temperature of the secondary working fluid flowing the from the supply line 3 of the first secondary thermal sub-network to the supply line 3' of the second secondary thermal sub-network, and lower the temperature of the secondary working fluid flowing the from the return line 5' of the second secondary thermal sub-network to the return line 5 of the first secondary thermal sub-network.

Accordingly, this allows circulating high-temperature secondary working fluid in a supply line 3, 3' of the secondary thermal network 3, 3', 5, 5', 60, 61, 62, 63 and low-temperature secondary working fluid in a return line 5, 5' of the secondary thermal network 3, 3', 5, 5', 60, 61, 62, 63. Further, increasing the temperature of the high-temperature secondary working fluid circulated in supply line 3, 3' of the secondary thermal network 3, 3', 5, 5', 60, 61, 62, 63 and lowering the temperature of the low-temperature secondary working fluid circulated in return line 5, 5' of the secondary thermal network 3, 3', 5, 5', 60, 61, 62, 63 by utilizing a heat pump arranged to the secondary thermal network 3, 3', 5, 5', 60, 61, 62, 63 between the supply line 3, 3' and the return line 5, 5'.

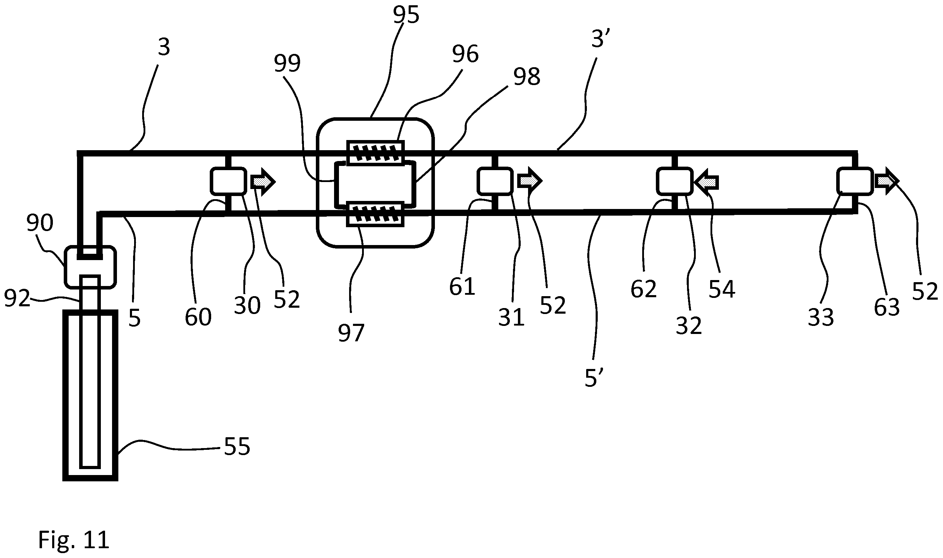

Figure 11 shows a modification of embodiment of figure 10. In figure 11, the sub-network heat exchanger 95 divides the secondary thermal network to the first secondary thermal sub-network 3, 5 and to the second secondary thermal sub-network 3', 5'. The sub-network heat exchanger 95 may be sub-network heat pump 95 arranged between the supply line 3, '3' and the return line 5, 5' allowing heat exchange between the supply line 3, 3' and the return line 5, 5'. The sub-network heat pump 95 comprise sub-network heat exchanger fluid circuit 98, 99 and a first sub-network heat exchange connection 96 and a second sub-network heat exchange connection 97 such that heat energy may be exchanged between the supply line 3, 3' and the return line 5, 5'. Thus, the sub-network heat exchanger 95 divides the secondary thermal network to secondary thermal sub-networks and allows adjusting the temperature of the secondary working fluid. Accordingly, the sub-network heat exchanger 95 may raise the temperature of the secondary working fluid flowing the from the supply line 3 of the first secondary thermal sub-network to the supply line 3' of the second secondary thermal sub-network, and lower the temperature of the secondary working fluid flowing the from the return line 5' of the second secondary thermal sub-network to the return line 5 of the first secondary thermal sub-network.

Accordingly, this allows circulating high-temperature secondary working fluid in a supply line 3, 3' of the secondary thermal network 3, 3', 5, 5', 60, 61, 62, 63 and low-temperature secondary working fluid in a return line 5, 5' of the secondary thermal network 3, 3', 5, 5', 60, 61, 62, 63. Further, increasing the temperature of the high-temperature secondary working fluid circulated in supply line 3, 3' of the secondary thermal network 3, 3', 5, 5', 60, 61, 62, 63 and lowering the temperature of the low-temperature secondary working fluid circulated in return line 5, 5' of the secondary thermal network 3, 3', 5, 5', 60, 61, 62, 63 by utilizing a heat pump arranged to the secondary thermal network 3, 3', 5, 5', 60, 61, 62, 63 between the supply line 3, 3' and the return line 5, 5'.

The embodiment of figure 11 further comprises the secondary heat pump or heat exchanger 90 arranged between the first secondary thermal sub-network 3, 5 and the geothermal network 92. The secondary heat pump 90 is arranged to provide secondary heat exchange connection between the secondary working fluid and the geothermal working fluid, and between the geothermal network 92 and the first secondary thermal network 3, 5. Accordingly, the circulation of the secondary working fluid and the geothermal working fluid, as well as the geothermal network (or the geothermal heat exchanger 55) and the first secondary thermal network 3, 5 are separated from each other with the secondary heat pump 90. Therefore, the geothermal heat exchanger 55 is arranged in heat exchange connection with the secondary thermal network 3, 3', 5, 5', 60, 61, 62, 63 and the secondary heat pump 90 is provided between the geothermal heat exchanger 55 and the secondary thermal network 3, 3', 5, 5', 60, 61, 62, 63 or the first secondary thermal network 3, 5 for providing heat exchange between secondary thermal network 3, 3', 5, 5', 60, 61, 62, 63 or the first secondary thermal network 3, 5 and the geothermal heat exchanger 55.

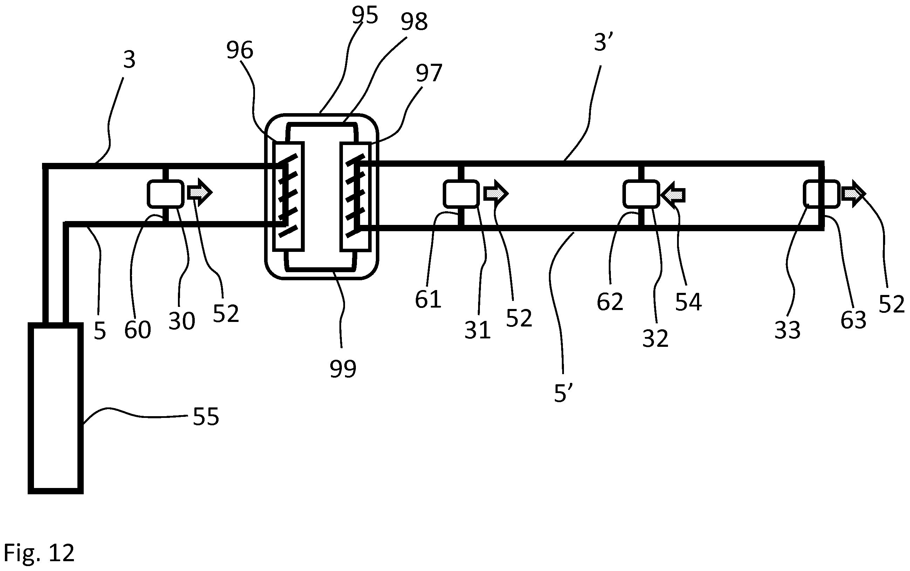

Figure 12 shows an alternative embodiment in which the sub-network heat exchanger or heat pump 95 provided between the first secondary thermal sub-network 3, 5 and the second secondary thermal sub-network 3', 5' and arranged to provide sub-network heat exchange between the first secondary thermal sub-network 3, 5 and the second secondary thermal sub-network 3', 5'. Thus, in this embodiment, the sub-network heat exchanger or sub-network heat pump 95 is arranged between the two or more secondary thermal sub-networks 3, 5, 60; 3', 5', 61, 62, 63 for providing heat exchange between the two or more secondary thermal sub-networks 3, 5, 60; 3', 5', 61, 62, 63 and the two or more secondary thermal sub-networks are separate from each other with the sub-network heat exchanger or sub-network heat pump 95. Accordingly, the first secondary thermal sub-network provides a first secondary working fluid circulation and the second secondary thermal sub-network provides a second secondary working fluid circulation. The first and second secondary thermal sub-networks are not in fluid communication with each other but separate secondary working fluid are circulated in the first and second secondary thermal sub-networks. However, the system and arrangement of figure 12 may be operated in similar manner as the system and arrangement of figure 10 for raising and lowering temperature.

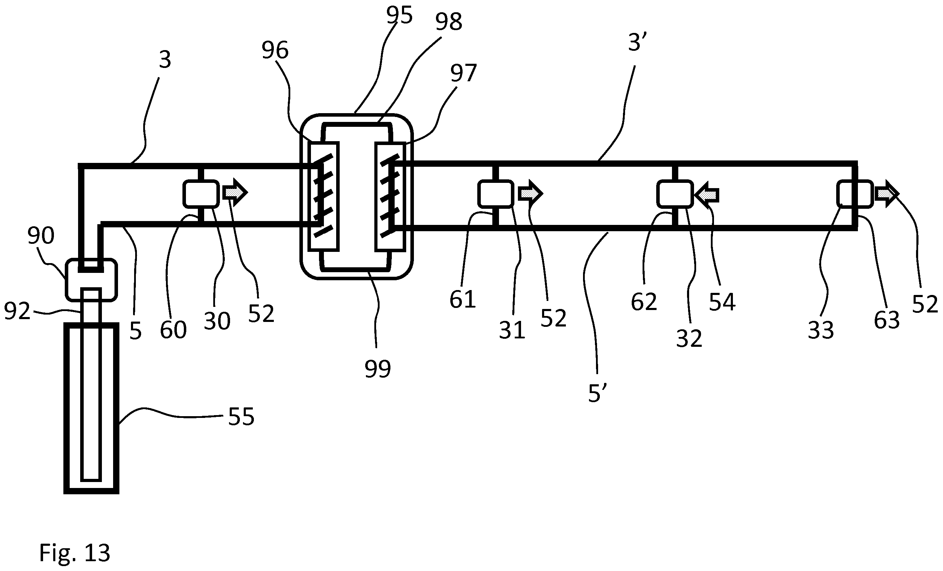

Figure 13 shows a modification of the embodiment of figure 12. Figure 13 shows an alternative embodiment in which the sub-network heat exchanger or heat pump 95 provided between the first secondary thermal sub-network 3, 5 and the second secondary thermal sub-network 3', 5' and arranged to provide sub-network heat exchange between the first secondary thermal sub-network 3, 5 and the second secondary thermal sub-network 3', 5'. Thus, in this embodiment, the sub-network heat exchanger or sub-network heat pump 95 is arranged between the two or more secondary thermal sub-networks 3, 5, 60; 3', 5', 61, 62, 63 for providing heat exchange between the two or more secondary thermal sub-networks 3, 5, 60; 3', 5', 61, 62, 63 and the two or more secondary thermal sub-networks are separate from each other with the sub-network heat exchanger or sub-network heat pump 95. Accordingly, the first secondary thermal sub-network provides a first secondary working fluid circulation and the second secondary thermal sub-network provides a second secondary working fluid circulation. The first and second secondary thermal sub-networks are not in fluid communication with each other but separate secondary working fluid are circulated in the first and second secondary thermal sub-networks. However, the system and arrangement of figure 13 may be operated in similar manner as the system and arrangement of figure 11 for raising and lowering temperature.

The embodiment of figure 13 further comprises the secondary heat pump or heat exchanger 90 arranged between the first secondary thermal sub-network 3, 5 and the geothermal network 92. The secondary heat pump 90 is arranged to provide secondary heat exchange connection between the secondary working fluid and the geothermal working fluid, and between the geothermal network 92 and the first secondary thermal network 3, 5. Accordingly, the circulation of the secondary working fluid and the geothermal working fluid, as well as the geothermal network (or the geothermal heat exchanger 55) and the first secondary thermal network 3, 5 are separated from each other with the secondary heat pump 90. Therefore, the geothermal heat exchanger 55 is arranged in heat exchange connection with the secondary thermal network 3, 3', 5, 5', 60, 61, 62, 63 and the secondary heat pump 90 is provided between the geothermal heat exchanger 55 and the secondary thermal network 3, 3', 5, 5', 60, 61, 62, 63 or the first secondary thermal network 3, 5 for providing heat exchange between secondary thermal network 3, 3', 5, 5', 60, 61, 62, 63 or the first secondary thermal network 3, 5 and the geothermal heat exchanger 55.

According to figures 10, 11, 12 and 13, two or more parallel building connections 100 may be connected to the each other via the supply line 3, 3' and the return line 5, 5' of the two or more secondary thermal sub-networks 3, 5, 60; 3', 5', 61, 62, 63 and arranged in heat transfer connection with each other via the supply line 3, 3' and the return line 5, 5'.

Further, at least two of the two or more secondary thermal sub-networks comprises one or more building connections 100 or one or more primary heat exchangers 30, 31, 32, 33. Additionally, the building connections 100 are connected to the each other via the two or more secondary thermal sub-networks and the one or more sub-network heat pumps 95 and arranged in heat transfer connection with each other via the two or more secondary thermal sub-networks and the one or more sub-network heat pumps 95.

According to the above mentioned, when the secondary thermal network comprises two or more secondary thermal sub-networks, the building connections 100 and the primary heat exchangers 30, 31, 32, 33 of different secondary thermal sub-networks are in heat exchange connection with each other via the supply lines 3, 3' and return lines 5, 5' of different secondary thermal sub-networks and via the one or more sub-network heat pumps or heat exchangers 95.

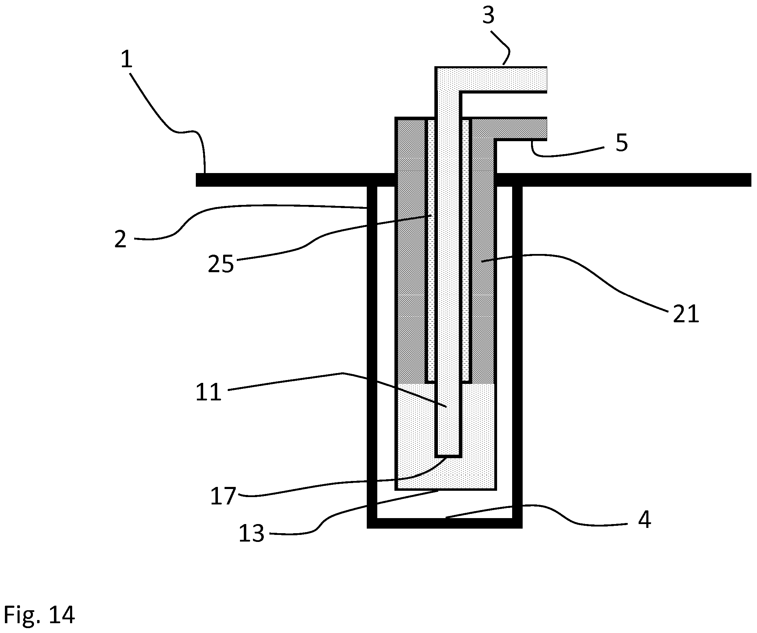

Figures 14 and 14 shows different embodiment of the geothermal heat exchanger 55.

Figure 14 shows another embodiment in which the rise pipe 11 is arranged inside the drain pipe 21. In this embodiment, the rise pipe 11 and the drain pipe 21 are arranged nested within each other or they may be arranged coaxially within each other such that the rise pipe 11 is inside the drain pipe 21, as in figure 1. The rise pipe 11 comprises the first thermal insulation 25. The first thermal insulation 25 decreases or minimizes heat transfer between the rise pipe 11 and the drain pipe 21 and between the working fluid flow 22 and the working fluid flow 12.

As shown in figure 14, the thermal insulation 25 extends to a distance from the lower end 17 of the rise pipe 11 along the rise pipe 11.

In the embodiment of figure 10, the drain pipe 21 is a pipe having a closed lower end 13 and extending inside the ground hole 2 to the lower end 4 of the ground hole in the vicinity thereof. Accordingly, the rise pipe 11 is entirely inside the drain pipe 21 in the ground hole 2 and the geothermal working fluid does not come in direct contact with the ground.

It should be noted, that the ground hole 2 may form the drain pipe 21 and the separate drain pipe may be omitted, as in figures 1 and 2. Alternatively, the separate drain pipe 21 extends a pre-determined distance from the ground surface 1 with an open lower end, and the ground hole 2 forms at least part of the drain pipe.

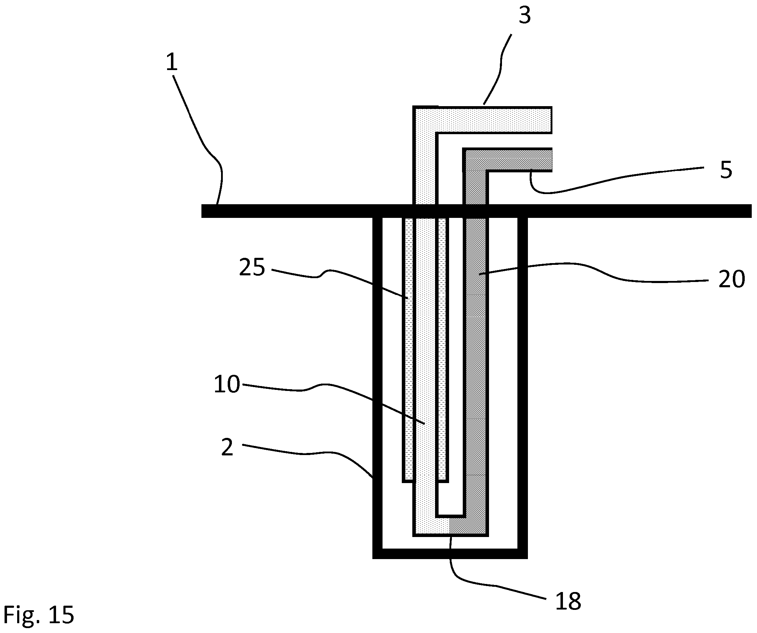

In the embodiment of figure 15 which is not used by the method according to the invention, the rise pipe 10 and the drain pipe 20 are arranged at a distance from each other and connected to each other with a connection pipe part 18, or bend, at the lower ends of the rise pipe 10 and the drain pipe 20. In other words, the rise pipe 10 and the drain pipe 20 form a U-shaped pipe structure. However, it should be noted that the present invention is not limited to any particular pipe structure of the rise pipe 10 and the drain pipe 20 or any number of rise pipes 10 and drain pipe 20.

In the embodiment of figure 15, the first thermal insulation 25 extends along the rise pipe 10 to distance from the lower end of the rise pipe 10 or the connection pipe part 18 or the bend.

The first thermal insulation may be provided don the inner surface and/or outer surface of the rise pipe 10, 11.

The present invention provides a method for heating and cooling of several building spaces 80, 81, 82, 83 or buildings 50 by utilizing the system and arrangement as described above in connection with figures 1 to 14.

The method comprises circulating secondary working fluid in the secondary thermal network 3, 3', 5, 5', 60, 61, 62, 63 and performing two or more first heat exchange steps parallel in the secondary thermal network 3, 3', 5, 5', 60, 61, 62, 63 between the secondary working fluid and the primary working fluid of the building space 80, 81, 82, 83 or buildings 50 in connection with two or more different building spaces 80, 81, 82, 83 or buildings 5. The method further comprises performing a second heat exchange step between the secondary working fluid circulated in the secondary thermal network 3, 3', 5, 5', 60, 61, 62, 63 and ground with a geothermal heat exchanger 55 arranged in a ground hole 2 and arranged in connection with the secondary thermal network 3, 3', 5, 5', 60, 61, 62, 63. Accordingly, the method may comprise heat exchange between building space 80, 81, 82, 83 or buildings 50 and between the geothermal heat exchanger 55 and the building space 80, 81, 82, 83 or buildings 50.

In the method, at least one of the two or more parallel first heat exchange steps may be performed in a heating mode in which heat energy in transferred from the secondary working fluid to the primary working fluid of the building space 80, 81, 82, 83 or the building 50, and at least one of the two or more first primary heat exchange steps may be performed in a cooling mode in which heat energy in transferred from the primary working fluid of the building space 80, 81, 82, 83 or the building 50 to the secondary working fluid.

Therefore, the method comprises carrying out the two or more parallel first heat exchange steps with two or more parallel primary heat exchangers 30, 31, 32, 33 or the building connections 100 provided in connection with two or more different building spaces 80, 81, 82, 83 or buildings 5. Then, operating at least one of the two or more the primary heat exchanges 30, 31, 32, 33 in the heating mode in which heat energy in transferred from the secondary working fluid to the primary working fluid of the building space 80, 81, 82, 83 or the building 50, and operating at least one of the two or more the primary heat exchangers 30, 31, 32, 33 in the cooling mode in which heat energy in transferred from the primary working fluid of the building space 80, 81, 82, 83 or the building 50 to the secondary working fluid. The method may thus further comprise carrying out district thermal exchange between the at least one of the two or more the primary heat exchanges 30, 31, 32, 33 operated in the heating mode and the at least one of the two or more the primary heat exchangers 30, 31, 32, 33 operated in the cooling mode via the secondary thermal network 3, 3', 5, 5', 60, 61, 62, 63.

Accordingly, in the method the geothermal heat exchanger 55 in a heat extraction mode in which the second heat exchange step comprises transferring heat energy from the ground to the secondary working fluid or to the geothermal working fluid in the geothermal heat exchanger 55, or in a heat charging mode in which the second heat exchange step comprises transferring heat energy from the secondary working fluid or from the geothermal working fluid to the ground in the geothermal heat exchanger 55 based on the overall or net thermal energy demand of the parallel building connections 100 or the primary heat exchanges 30, 31, 32, 33.

The second heat exchange step comprises circulating the secondary working fluid in the geothermal heat exchanger 55 and performing heat exchange between the secondary working fluid and the ground in the ground hole 2.

Alternatively, the second heat exchange step comprises circulating geothermal working fluid in the geothermal heat exchanger 55, performing heat exchange between the secondary working fluid circulated in the secondary thermal network 3, 3', 5, 5', 60, 61, 62, 63 and the geothermal working fluid circulated in the geothermal heat exchanger 55 and performing heat exchange between the geothermal working fluid and the ground in the ground hole 2.

Alternatively, the method further comprises operating the geothermal heat exchanger 55 in a heat extraction mode in which the second heat exchange step comprises transferring heat energy from the geothermal working fluid in the geothermal heat exchanger 55 to the secondary working fluid in the secondary heat pump 90, or in a heat charging mode in which the second heat exchange step comprises transferring heat energy from the secondary working fluid to the geothermal working fluid in the secondary heat pump 90 based on the overall or net thermal energy demand of the parallel building connections 100 or the primary heat exchanges 30, 31, 32, 33.

The second heat exchange step is performed between the secondary working fluid circulated in the secondary thermal network 3, 3', 5, 5', 60, 61, 62, 63 and ground with the geothermal heat exchanger 55 in the ground hole 2. The ground hole has a depth of at least 300m, or at least 500m, or between 300m and 3000m, or between 500m and 2500m. Alternatively or additionally, the ground hole 2 extends into the ground to a depth in which the temperature is at least 15 °C, or approximately 20 °C, or at least 20 °C.

The invention has been described above with reference to the examples shown in the figures. However, the invention is in no way restricted to the above examples but may vary within the scope of the claims.

## Claims

1. A method for heating and cooling of several building spaces (80, 81, 82, 83) or buildings (50), the method comprising:
- circulating secondary working fluid in a secondary thermal network (3, 3', 5, 5', 60, 61, 62, 63);
- performing two or more first heat exchange steps parallel in the secondary thermal network (3, 3', 5, 5', 60, 61, 62, 63) between the secondary working fluid and a primary working fluid of the building space (80, 81, 82, 83) or building (50) in connection with two or more different building spaces (80, 81, 82, 83) or buildings (5); and
- performing a second heat exchange step between the secondary working fluid circulated in the secondary thermal network (3, 3', 5, 5', 60, 61, 62, 63) and ground with a geothermal heat exchanger (55) arranged in a ground hole (2) and arranged in connection with the secondary thermal network (3, 3', 5, 5', 60, 61, 62, 63). or between geothermal working fluid circulating in the geothermal heat exchanger (55) and ground, performing heat exchange between the secondary working fluid circulated in the secondary thermal network (3, 3', 5, 5', 60, 61, 62, 63) and the geothermal working fluid circulated in the geothermal heat exchanger (55) and performing heat exchange between the geothermal working fluid and the ground in the ground hole (2),
wherein the method comprises:
- the ground hole (2) has a depth of at least 300m, the geothermal heat exchanger (55) comprises a geothermal network (3, 3', 5, 5') having a rise pipe (10, 11) and a drain pipe (20, 21), the rise pipe (10, 11) is arranged inside the drain pipe (20, 21) and provided with a first thermal insulation (25) surrounding the rise pipe (10, 11) and extending along at least part of the length of the rise pipe (10, 11) from the ground surface (1), and
- operating the geothermal heat exchanger (55) in a heat extraction mode or in a heat charging mode:
operating the geothermal heat exchanger (55) in a heat extraction mode in which the second heat exchange step comprises transferring heat energy from the ground to the secondary working fluid or to the geothermal working fluid in the geothermal heat exchanger (55) and circulating the secondary working fluid or the geothermal working fluid downwards in the drain pipe (20, 21) and upwards in the rise pipe (10, 11) arranged inside the drain pipe (20, 21) and provided with the first thermal insulation (25), or
operating the geothermal heat exchanger (55) in a heat charging mode in which the second heat exchange step comprises transferring heat energy from the secondary working fluid or from the geothermal working fluid to the ground in the geothermal heat exchanger (55) and circulating the secondary working fluid or the geothermal working fluid downwards in the rise pipe (10, 11) arranged inside the drain pipe (20, 21) and provided with the first thermal insulation (25) and upwards in the drain pipe (10, 11).

2. A method according to claim 1, **characterized in that** the method comprises:
- performing at least one of the two or more parallel first heat exchange steps in a heating mode in which heat energy in transferred from the secondary working fluid to the primary working fluid of the building space (80, 81, 82, 83) or the building (50); or
- performing at least one of the two or more parallel first heat exchange steps in a cooling mode in which heat energy in transferred from the primary working fluid of the building space (80, 81, 82, 83) or the building (50) to the secondary working fluid; or
- performing at least one of the two or more parallel first heat exchange steps in a heating mode in which heat energy in transferred from the secondary working fluid to the primary working fluid of the building space (80, 81, 82, 83) or the building (50), and performing at least one of the two or more first primary heat exchange steps in a cooling mode in which heat energy in transferred from the primary working fluid of the building space (80, 81, 82, 83) or the building (50) to the secondary working fluid.

3. A method according to claim 1 or 2, **characterized in that** the method comprises:
- carrying out the two or more parallel first heat exchange steps with two or more parallel primary heat exchangers (30, 31, 32, 33) provided in connection with two or more different building spaces (80, 81, 82, 83) or buildings (5);
- operating at least one of the two or more the primary heat exchanges (30, 31, 32, 33) in the heating mode in which heat energy in transferred from the secondary working fluid to the primary working fluid of the building space (80, 81, 82, 83) or the building (50), and operating at least one of the two or more the primary heat exchangers (30, 31, 32, 33) in the cooling mode in which heat energy in transferred from the primary working fluid of the building space (80, 81, 82, 83) or the building (50) to the secondary working fluid; and
- carrying out district thermal exchange between the at least one of the two or more the primary heat exchanges (30, 31, 32, 33) operated in the heating mode and the at least one of the two or more the primary heat exchangers (30, 31, 32, 33) operated in the cooling mode via the secondary thermal network (3, 3', 5, 5', 60, 61, 62, 63).

## Patentansprüche

1. Verfahren zum Heizen und Kühlen mehrerer Gebäuderäume (80, 81, 82, 83) oder Gebäude (50), wobei das Verfahren umfasst:
- Zirkulieren eines sekundären Arbeitsfluids in einem sekundären Wärmenetz (3, 3', 5, 5', 60, 61, 62, 63);
- Durchführen von zwei oder mehreren ersten Wärmetauschschritten parallel im sekundären Wärmenetz (3, 3', 5, 5', 60, 61, 62, 63) zwischen dem sekundären Arbeitsfluid und einem primären Arbeitsfluid des Gebäuderaums (80, 81, 82, 83) oder Gebäudes (50) in Verbindung mit zwei oder mehreren unterschiedlichen Gebäuderäumen (80, 81, 82, 83) oder Gebäuden (5); und
- Durchführen eines zweiten Wärmetauschschritts zwischen dem im sekundären Wärmenetz (3, 3', 5, 5', 60, 61, 62, 63) zirkulierten sekundären Arbeitsfluid und Erdreich mit einem in einer Erdbohrung (2) angeordneten und in Verbindung mit dem sekundären Wärmenetz (3, 3', 5, 5', 60, 61, 62, 63) angeordneten geothermischen Wärmetauscher (55), oder zwischen im geothermischen Wärmetauscher (55) zirkulierendem geothermischen Arbeitsfluid und Erdreich, Durchführen eines Wärmetauschs zwischen dem im sekundären Wärmenetz (3, 3', 5, 5', 60, 61, 62, 63) zirkulierten sekundären Arbeitsfluid und dem im geothermischen Wärmetauscher (55) zirkulierten geothermischen Arbeitsfluid und Durchführen eines Wärmeaustauschs zwischen dem geothermischen Arbeitsfluid und dem Erdreich in der Erdbohrung (2), wobei das Verfahren umfasst:
- dass die Erdbohrung (2) eine Tiefe von mindestens 300 m aufweist, der geothermische Wärmetauscher (55) ein Erdwärmenetz (3, 3', 5, 5') umfasst, das ein Steigrohr (10, 11) und ein Abflussrohr (20, 21) aufweist, das Steigrohr (10, 11) innerhalb des Abflussrohrs (20, 21) angeordnet und mit einer ersten Wärmedämmung (25) bereitgestellt ist, die das Steigrohr (10, 11) umgibt und sich entlang mindestens eines Teils der Länge des Steigrohrs (10, 11) von der Erdoberfläche (1) aus erstreckt, und
- Betreiben des geothermischen Wärmetauschers (55) in einem Wärmeentnahmemodus oder in einem Wärmelademodus:
Betreiben des geothermischen Wärmetauschers (55) in einem Wärmeentnahmemodus, bei dem der zweite Wärmetauschschritt Übertragen von Wärmeenergie aus dem Boden auf das sekundäre Arbeitsfluid oder das geothermische Arbeitsfluid im geothermischen Wärmetauscher (55) und Zirkulieren des sekundären Arbeitsfluids oder des geothermischen Arbeitsfluids nach unten im Abflussrohr (20, 21) und nach oben im Steigrohr (10,11), das innerhalb des Abflussrohrs (20, 21) angeordnet und mit der ersten Wärmedämmung (25) bereitgestellt ist, umfasst, oder
Betreiben des geothermischen Wärmetauschers (55) in einem Wärmelademodus, bei dem der zweite Wärmetauschschritt Übertragen von Wärmeenergie von dem sekundären Arbeitsfluid oder von dem geothermischen Arbeitsfluid auf den Boden in dem geothermischen Wärmetauscher (55) und Zirkulieren des sekundären Arbeitsfluids oder des geothermischen Arbeitsfluids nach unten im Steigrohr (10, 11), das innerhalb des Abflussrohrs (20, 21) angeordnet und mit der ersten Wärmedämmung (25) bereitgestellt ist, und nach oben im Abflussrohr (10, 11) umfasst.

2. Verfahren nach Anspruch 1, **dadurch gekennzeichnet, dass** das Verfahren umfasst:
- Durchführen von mindestens einem der zwei oder mehreren parallelen ersten Wärmetauschschritte in einem Heizmodus, bei dem Wärmeenergie von dem sekundären Arbeitsfluid auf das primäre Arbeitsfluid des Gebäuderaums (80, 81, 82, 83) oder des Gebäudes (50) übertragen wird; oder
- Durchführen von mindestens einem der zwei oder mehreren parallelen ersten Wärmetauschschritte in einem Kühlmodus, bei dem Wärmeenergie vom primären Arbeitsfluid des Gebäuderaums (80, 81, 82, 83) oder des Gebäudes (50) auf das sekundäre Arbeitsfluid übertragen wird; oder
- Durchführen von mindestens einem der zwei oder mehreren parallelen ersten Wärmetauschschritte in einem Heizmodus, bei dem Wärmeenergie von dem sekundären Arbeitsfluid auf das primäre Arbeitsfluid des Gebäuderaums (80, 81, 82, 83) oder des Gebäudes (50) übertragen wird, und Durchführen von mindestens einem der zwei oder mehreren ersten primären Wärmetauschschritte in einem Kühlmodus, bei dem Wärmeenergie von dem primären Arbeitsfluid des Gebäuderaums (80, 81, 82, 83) oder des Gebäudes (50) auf das sekundäre Arbeitsfluid übertragen wird.

3. Verfahren nach Anspruch 1 oder 2, **dadurch gekennzeichnet, dass** das Verfahren umfasst:
- Durchführen der zwei oder mehreren parallelen ersten Wärmetauschschritte mit zwei oder mehreren parallelen primären Wärmetauschern (30, 31, 32, 33), die in Verbindung mit zwei oder mehreren verschiedenen Gebäuderäumen (80, 81, 82, 83) oder Gebäuden (5) bereitgestellt sind;
- Betreiben von mindestens einem der zwei oder mehreren primären Wärmetauscher (30, 31, 32, 33) im Heizmodus, bei dem Wärmeenergie von dem sekundären Arbeitsfluid auf das primäre Arbeitsfluid des Gebäuderaums (80, 81, 82, 83) oder des Gebäudes (50) übertragen wird, und Betreiben von mindestens einem der zwei oder mehreren primären Wärmetauscher (30, 31, 32, 33) im Kühlmodus, bei dem Wärmeenergie von dem primären Arbeitsfluid des Gebäuderaums (80, 81, 82, 83) oder des Gebäudes (50) auf das sekundäre Arbeitsfluid übertragen wird; und
- Durchführen eines Fernwärmeaustauschs zwischen dem mindestens einen der zwei oder mehreren im Heizmodus betriebenen primären Wärmetauschern (30, 31, 32, 33) und dem mindestens einen der zwei oder mehreren im Kühlmodus betriebenen primären Wärmetauschern (30, 31, 32, 33) über das sekundäre Wärmenetz (3, 3', 5, 5', 60, 61, 62, 63).

## Revendications

1. Procédé de chauffage et de refroidissement de plusieurs espaces de bâtiment (80, 81, 82, 83) ou bâtiments (50), le procédé comprenant les étapes consistant à :
- faire circuler un fluide de travail secondaire dans un réseau thermique secondaire (3, 3', 5, 5', 60, 61, 62, 63) ;
- effectuer deux premières étapes d'échange de chaleur ou plus en parallèle dans le réseau thermique secondaire (3, 3', 5, 5', 60, 61, 62, 63) entre le fluide de travail secondaire et un fluide de travail primaire de l'espace de bâtiment (80, 81, 82, 83) ou du bâtiment (50) en relation avec deux espaces de bâtiment différents (80, 81, 82, 83) ou bâtiments (5) ou plus ; et
- effectuer une seconde étape d'échange de chaleur entre le fluide de travail secondaire mis en circulation dans le réseau thermique secondaire (3, 3', 5, 5', 60, 61, 62, 63) et le sol avec un échangeur de chaleur géothermique (55) agencé dans un trou de forage (2) et agencé en liaison avec le réseau thermique secondaire (3, 3', 5, 5', 60, 61, 62, 63) ou entre le fluide de travail géothermique circulant dans l'échangeur de chaleur géothermique (55) et le sol, effectuer un échange de chaleur entre le fluide de travail secondaire mis en circulation dans le réseau thermique secondaire (3, 3', 5, 5', 60, 61, 62, 63) et le fluide de travail géothermique mis en circulation dans l'échangeur de chaleur géothermique (55), et effectuer un échange de chaleur entre le fluide de travail géothermique et le sol dans le trou de forage (2),
dans lequel le procédé comprend :
- le trou de forage (2) présentant une profondeur d'au moins 300 m, l'échangeur de chaleur géothermique (55) comprenant un réseau géothermique (3, 3', 5, 5') présentant un tuyau de montée (10, 11) et un tuyau de drainage (20, 21), le tuyau de montée (10, 11) étant agencé à l'intérieur du tuyau de drainage (20, 21) et pourvu d'une première isolation thermique (25) entourant le tuyau de montée (10, 11) et s'étendant sur au moins une partie de la longueur du tuyau de montée (10, 11) à partir de la surface de sol (1), et
- faire fonctionner l'échangeur de chaleur géothermique (55) dans un mode d'extraction de chaleur ou dans un mode de charge de chaleur :
faire fonctionner l'échangeur de chaleur géothermique (55) dans un mode d'extraction de chaleur dans lequel la seconde étape d'échange de chaleur comprend un transfert d'énergie thermique du sol au fluide de travail secondaire ou au fluide de travail géothermique dans l'échangeur de chaleur géothermique (55), et faire circuler le fluide de travail secondaire ou le fluide de travail géothermique vers le bas dans le tuyau de drainage (20, 21) et vers le haut dans le tuyau de montée (10, 11) agencé à l'intérieur du tuyau de drainage (20, 21) et pourvu de la première isolation thermique (25), ou
faire fonctionner l'échangeur de chaleur géothermique (55) dans un mode de charge de chaleur dans lequel la seconde étape d'échange de chaleur comprend un transfert d'énergie thermique du fluide de travail secondaire ou du fluide de travail géothermique vers le sol dans l'échangeur de chaleur géothermique (55), et faire circuler le fluide de travail secondaire ou le fluide de travail géothermique vers le bas dans le tuyau de montée (10, 11) agencé à l'intérieur du tuyau de drainage (20, 21) et pourvu de la première isolation thermique (25) et vers le haut dans le tuyau de drainage (10, 11).

2. Procédé selon la revendication 1, **caractérisé en ce que** le procédé comprend les étapes consistant à :
- effectuer au moins une des deux premières étapes d'échange de chaleur parallèles ou plus dans un mode de chauffage dans lequel de l'énergie thermique est transférée du fluide de travail secondaire au fluide de travail primaire de l'espace de bâtiment (80, 81, 82, 83) ou du bâtiment (50) ; ou
- effectuer au moins une des deux premières étapes d'échange de chaleur parallèles ou plus dans un mode de refroidissement dans lequel de l'énergie thermique est transférée du fluide de travail primaire de l'espace de bâtiment (80, 81, 82, 83) ou du bâtiment (50) au fluide de travail secondaire ; ou
- effectuer au moins l'une des deux premières étapes d'échange de chaleur parallèles ou plus dans un mode de chauffage dans lequel de l'énergie thermique est transférée du fluide de travail secondaire au fluide de travail primaire de l'espace de bâtiment (80, 81, 82, 83) ou du bâtiment (50), et effectuer au moins l'une des deux premières étapes d'échange de chaleur primaire ou plus dans un mode de refroidissement dans lequel de l'énergie thermique est transférée du fluide de travail primaire de l'espace de bâtiment (80, 81, 82, 83) ou du bâtiment (50) au fluide de travail secondaire.

3. Procédé selon la revendication 1 ou 2, **caractérisé en ce que** le procédé comprend les étapes consistant à :
- réaliser les deux premières étapes d'échange de chaleur parallèles ou plus avec deux échangeurs de chaleur primaires parallèles (30, 31, 32, 33) ou plus prévus en liaison avec deux espaces de bâtiment (80, 81, 82, 83) ou bâtiments (5) différents ou plus ;
- faire fonctionner au moins l'un des deux échangeurs de chaleur primaires (30, 31, 32, 33) ou plus dans le mode de chauffage dans lequel de l'énergie thermique est transférée du fluide de travail secondaire au fluide de travail primaire de l'espace de bâtiment (80, 81, 82, 83) ou du bâtiment (50), et faire fonctionner au moins l'un des deux échangeurs de chaleur primaires (30, 31, 32, 33) ou plus dans le mode de refroidissement dans lequel de l'énergie thermique est transférée du fluide de travail primaire de l'espace de bâtiment (80, 81, 82, 83) ou du bâtiment (50) au fluide de travail secondaire ; et
- réaliser un échange de chaleur local entre au moins un des deux échangeurs de chaleur primaires (30, 31, 32, 33) ou plus fonctionnant dans le mode de chauffage et au moins un des deux échangeurs de chaleur primaires (30, 31, 32, 33) ou plus fonctionnant dans le mode refroidissement via le réseau thermique secondaire (3, 3', 5, 5', 60, 61, 62, 63).
